(19) Europäisches Patentamt
European Patent Office
Office européen des brevets

(11) EP 4 752 262 A1

(12) EUROPÄISCHE PATENTANMELDUNG

(43) Veröffentlichungstag:
**03.06.2026 Patentblatt 2026/23**

(21) Anmeldenummer: **24215882.2**

(22) Anmeldetag: **27.11.2024**

(51) Internationale Patentklassifikation (IPC):
***C25B 1/04*** (2021.01) ***C25B 13/08*** (2006.01)
***H01M 4/86*** (2006.01) ***H01M 4/88*** (2006.01)
***H01M 8/1004*** (2016.01) *H01M 8/1044* (2016.01)
*H01M 8/1081* (2016.01)

(52) Gemeinsame Patentklassifikation (CPC):
**C25B 1/04; C25B 13/08; H01M 4/8652;**
**H01M 4/8814; H01M 4/8828; H01M 8/1004;**
H01M 4/8668; H01M 8/1044; H01M 8/1081

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Evonik Operations GmbH**
**45128 Essen (DE)**

(72) Erfinder:
- **WILD, Andreas**
  **45721 Haltern an See (DE)**
- **WATZELE, Sebastian**
  **45657 Recklinghausen (DE)**
- **KÖHLING, Christoph**
  **48249 Dülmen (DE)**
- **RÖHLING, Anna**
  **48249 Dülmen (DE)**
- **VOLLMER, Sarah**
  **45768 Marl (DE)**
- **BÖCKENBERG, Noah**
  **48147 Münster (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

# (54) VERBESSERUNG DER MECHANISCHEN EIGENSCHAFTEN VON ELEKTROKATALYTISCH AKTIVEN VERBUNDKÖRPERN

(57) Die Erfindung befasst sich mit elektrokatalytisch aktiven bzw. aktivierbaren Schichtkörpern, deren Herstellung und Verwendung als Anionenaustauschmembran (AEM) in der alkalischen Wasserelektrolyse. Ihr lag unter anderem die Aufgabe zu Grunde einen Schichtkörper bereitzustellen, der beim Einsatz als AEM in der alkalischen Wasserelektrolyse möglichst geringfügig quillt. Dies gelingt mit einem textilen Flächengebilde, welches als Bewehrung eingesetzt wird. Ein wesentlicher Aspekt der Erfindung besteht in der Abstimmung des Fasermaterials auf das Membranmaterial: Es wird ein Fasermaterial verwendet, welches eine chemische Ähnlichkeit zu dem Membranmaterial hat. Die erwähnte chemische Ähnlichkeit besteht in den Wiederholeinheiten des polymeren Fasermaterials und des Ionomers, die beide jeweils mindestens zwei Phenylen-Gruppen aufweisen.

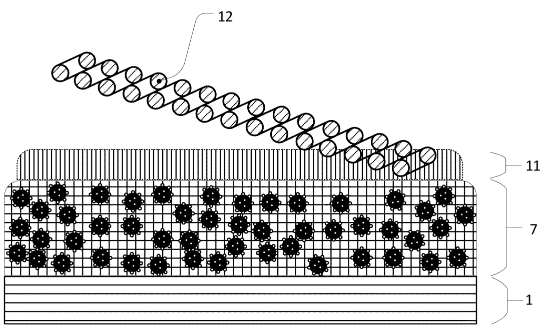


Fig. 7



Processed by Luminess, 75001 PARIS (FR)

## Beschreibung

Gebiet der Erfindung

Die Erfindung befasst sich mit elektrokatalytisch aktiven bzw. aktivierbaren Schichtkörpern, deren Herstellung und Verwendung als Anionenaustauschmembran in der alkalischen Wasserelektrolyse.

Technischer Hintergrund

Katalytisch beschichtete Membranen (engl.: catalyst coated membranes - CCM Pluralform: CCMs) sind Schichtkörper, die mindestens eine erste Schicht mit einem Ionen leitenden Polymer (Ionomer) und mindestens eine zweite Schicht mit einem elektrokatalytisch aktivem oder aktivierbaren Material (Elektrokatalysator) umfassen. Die erste Schicht dient als Membran, die zweite Schicht als Katalysator. Zwischen der Ionomer-Schicht und der Elektrokatalysator-Schicht besteht direkter Kontakt über eine Grenzschicht. Die Grenzschicht ist idealerweise infinitesimal dünn; in der Realität gehen Katalysatorschicht und Ionomerschicht ineinander über und bilden in ihrem Übergangsbereich gemeinsam die Grenzschicht.

CCMs werden in elektrochemischen Zellen verbaut, etwa in Brennstoffzellen oder in Elektrolyseuren. Die chemische Natur von Elektrokatalysator und Ionomer richtet sich nach dem beabsichtigen Einsatzzweck der elektrochemischen Zelle. Ein Einsatzzweck ist die Wasserelektrolyse zur Herstellung von Wasserstoff und Sauerstoff (Wasserspaltung).

Eine Variante der Wasserspaltung ist die alkalische Membranwasserelektrolyse (engl. alkaline membrane water electrolysis). Hierbei kommt es darauf an, dass die Membranen eine gute Leitfähigkeit für Hydroxid-Anionen ($OH^-$) aufweisen. Diese Leitfähigkeit wird durch Anionen leitende Polymeren realisiert. Die aus diesen Ionomeren hergestellten Membranen werden daher als Anionenaustauschmembranen (engl. anion exchange membrane - AEM) bezeichnet. Da die Reaktion im alkalischen Milieu erfolgt, muss die AEM bei basischen Bedingungen stabil sein. Die alkalische Membranwasserelektrolyse wird auch oft AEM basierte Wasserspaltung (engl. AEM water electrolysis - AEMWE) genannt.

Einen hervorragenden Überblick über den gegenwärtigen Entwicklungsstand der AEM basierten Wasserspaltung bieten:
Volk Emily K. et al.: Recent progress in understanding the catalyst layer in anion exchange membrane electrolyzers - durability, utilization, and integration. EES. Catal., 2024,2, 109-137 DOI 10.1039/d3ey00193h

Ein wesentliches technisches Problem beim Einsatz von CCMs in AEMWE ist das Quellen: Im alkalischen Milieu der Zelle nimmt das Ionomer das im wässrigen Elektrolyt enthaltene Wasser auf und schwillt dadurch an. Dies verursacht eine geometrische Dimensionsänderung der CCM, die in der Regel anisotrop ausfällt. Dadurch verformt sich die gesamte Zelle und es kommt zu unerwünschten Undichtigkeiten oder elektrischen Fehlkontakten. Außerdem verursacht das Quellen regelmäßig eine Ablösung der Katalysatorschicht von der Membran. Zusätzlich ist der gequollene CCM anfälliger gegen von außen wirkende Kräfte.

Das Quellen der Membran ist nicht nur während des Elektrolysebetriebs ein Problem sondern auch beim Herstellen der CCM: So wird die Katalysatorschicht in der Regel in Form einer lösemittelhaltigen Katalysatortinte auf die Ionomerschicht aufgetragen. Nach dem Trocknen des Lösemittels verfestigt sich die Katalysatortinte und bildet auf der Ionomerschicht die Katalysatorschicht. Wenn das Ionomer in dem Lösemittel quillt, führt dies zu einem Verzerren der Ionomerschicht beim Beschichten, sodass die beschichtete Membran Falten wirft. Eine faltige Membran lässt sich kaum leckagefrei in eine elektrochemische Zelle einbauen.

Nicht nur die durch das Quellen der Membran verursachten Falten erschweren den Einbau der Membran in den Elektrolyseur. Selbst dann, wenn die Membran weitestgehend faltenfrei ist, können sich Unebenheiten ihrer Oberfläche negativ auf ihre Kontaktierbarkeit auswirken: In einer Elektrolysezelle wird die Membran in der Regel in einem so genannten "Stack" verbaut, das ist ein Stapel aus Membran inklusive Katalysatorschicht, gasdurchlässige Transportschichten (gas diffusion layer - GDL) und den Elektroden. Wenn die Oberfläche der Katalysatorschicht sehr uneben ist, bewirkt dies im Stack lokale mechanische Spannungsspitzen an dem Kontakt zur Transportschicht. Diese Spannungsspitzen können den die Katalysatorschicht mechanisch schädigen. Daher ist es im Interesse der Haltbarkeit der Katalysatorschicht, wenn diese eine möglichst ebene Oberfläche aufweist.

Stand der Technik

Um dem Problem des Quellens bei der Herstellung von AEM CCMs zu begegnen, entwickelte die Arbeitsgruppe um Susanne Koch ein Verfahren zur katalytischen Beschichtung von AEM, bei dem die Membran durch eine Maskierung gegen Verzerrung beim Beschichten geschützt wird:
Koch, S., Metzler, L., Kilian, S. K., Heizmann, P. A., Lombeck, F., Breitwieser, M., Vierrath, S., Toward Scalable Production: Catalyst-Coated Membranes (CCMs) for Anion-Exchange Membrane Water Electrolysis via Direct Bar Coating. Adv.

Sustainable Syst. 2023, 7, 2200332. DOI: 10.1002/adsu.202200332

Hier wird eine flache, Anionen leitende Membran zunächst mit einer PTFE-Folie maskiert und in deren freien Bereiche mit der Katalysatortinte direkt beschichtet. Zusätzlich wird eine Schutzfolie ebenfalls aus PTFE aufgeklebt. Die Maske dient dazu, Spannungen in der Membran aufzunehmen, damit sich die Membran beim Beschichten nicht zu stark verzieht.

Nachteil des von Koch et al. vorgeschlagenen Prozesses ist, dass dieser die Maskier-Folie erfordert, um das Quellen der Membran und damit letztendlich Faltenwurf zu verhindern. Die Maske dient ausschließlich der Herstellung der CCM und muss im gebrauchsfertigen Zustand der CCM wieder entfernt sein. Da die Maske aus dem Fluorpolymer PTFE besteht, ist das Wegwerfen aus Umweltgesichtspunkten abzulehnen. Daneben erfordert der Prozess noch viel Handarbeit und erscheint aus industrieller Sicht noch nicht skalierbar. Hinzu kommt, dass die von Koch et al. verwendete Katalysatortinte Methanol als Lösemittel enthält. Da Methanol als karzinogen, mutagen oder reproduktionstoxisch bekannt ist, wird dieses Lösemittel gemäß REACH-Verordnung als CMR-Stoff klassifiziert, was bei dessen Verarbeitung entsprechende Sicherheitsmaßnahmen erfordert. Im Labor macht das keine größeren Umstände; im industriellen Produktionsmaßstab ist das aber schon sehr aufwändig und entsprechend kostenintensiv.

Eine andere Möglichkeit, das Quellen der Membran zu verringern, besteht darin, in den Schichtkörper eine Bewehrung einzubauen (reinforcement). Bei der Bewehrung handelt es sich meist um eine Folie oder um ein textiles Flächengebilde:

So offenbart die EP 2774203 B1 ein Verfahren zur Herstellung einer verstärkten CCM, die als Protonenaustauschmembran (Proton exchange membrane - PEM) genutzt wird. Das dort verwendete Ionomer weist dementsprechend keine Leitfähigkeit für Hydroxidionen auf und kann deswegen nicht in der AEMWE eingesetzt werden. Bei der Bewehrung handelt es sich um eine poröse Folie.

Die WO 2024100383 A2 beschreibt eine katalytisch aktive Membran, die Anionen leitend sein kann. Bei deren Herstellung wird die Membranschicht auf die zuvor hergestellte Katalysatorschicht aufgetragen. Es handelt sich bei diesem Schichtkörper also nicht eine katalytisch beschichtete Membran im strengen Wortsinne, sondern um eine ionisch leitend beschichtete Katalysatorschicht. Zwecks Verstärkung ist dieser Schichtkörper mit einer Bewehrung versehen. Die Struktur der Bewehrung ist nicht näher offenbart.

Die WO 2024100413 A1 offenbart eine PEM-CCM, die mit einem Pt/C-Elektrokatalysator versehen ist. Die CCM enthält zur Verbesserung ihrer mechanischen Eigenschaften eine Verstärkung aus einem Vlies.

Die WO2024151961A1 beschreibt ein Verfahren zur Herstellung einer verstärkten AEM mit einem aromatischen Polymer. Die Anmeldung enthält keine Beispiele.

Malikah Najibah et al. haben eine Anionenaustauschmembran für den Einsatz in der Wasserelektrolyse entwickelt, die mit einem Gelege aus PBI Fasern verstärkt ist:

Malikah Najibah, Ekaterina Tsoy, Hamza Khalid, Yongfang Chen, Qingfeng Li, Chulsung Bae, Jaromir Hnát, Michaela Plevovä, Karel Bouzek, Jong Hyun Jang, Hyun S. Park, Dirk Henkensmeier: PBI nanofiber mat-reinforced anion exchange membranes with covalently linked interfaces for use in water electrolysers. Journal of Membrane Science, Volume 640, 2021, 119832 DOI 10.1016/j.memsci.2021.119832

Verschiedene Strategien zur Verstärkung von in der AEMWE eingesetzten CCMs stellen vor:

Henkensmeier, Dirk et al.: Separators and Membranes for Advanced Alkaline Water Electrolysis. Chemical Reviews, Vol. 124, Is 10, 6393-6443. DOI 10.1021/acs.chemrev.3c00694

Dieser Artikel beschreibt auch etablierte Testverfahren für in der AEMWE eingesetzte Membranen und nennt übliche Leistungswerte.

Die zum Zeitpunkt dieser Anmeldung noch unveröffentlichte EP 24169671.5 derselben Anmelderin betrifft ein Verfahren zur Herstellung eines unverstärkten katalytisch aktiven Membran für die AEMWE, bei welchem die Ionomerschicht auf die Katalysatorschicht aufgetragen wird.

Aufgabe

In Hinblick auf diesen Stand der Technik lag der Erfindung die Aufgabe zu Grunde einen elektrokatalytisch aktiven bzw. aktivierbaren Schichtkörper bereitzustellen, der beim Einsatz als AEM in der alkalischen Wasserelektrolyse möglichst stabil gegen äußere Kräfte ist, insbesondere im feuchten Zustand. Der Schichtkörper soll möglichst faltenfrei herstellbar sein und im bestimmungsgemäßen Einsatz eine gute Perfomance zeigen. Die Katalysatorschicht soll gut auf der Membran haften und sich nicht ablösen. Die Katalysatorschicht soll eine möglichst ebene Oberfläche aufweise. Schließlich soll die Herstellung möglichst auf aus Gesundheits- oder Umweltaspekten bedenkliche Stoffe verzichten. Insbesondere sollten keine CMR-Stoffe oder Fluorpolymere eingesetzt werden.

Lösung

Gelöst wird diese Aufgabe durch ein Verfahren zur Herstellung eines elektrokatalytisch aktiven bzw. aktivierbaren Schichtkörpers, welches die folgenden, nicht chronologischen Schritte umfasst:

a) Bereitstellen eines Transfersubstrats;

b) Bereitstellen einer Katalysatortinte, die mindestens ein erstes Lösemittel, mindestens ein im ersten Lösemittel gelöster, polymerer Binder, sowie mindestens einen partikulären Elektrokatalysator enthält;

c) Auftragen der Katalysatortinte auf das Transfersubstrat, sodass auf dem Transfersubstrat eine frische Katalysatorschicht entsteht;

d) Abreichern des ersten Lösemittels aus der frischen Katalysatorschicht, sodass auf dem Transfersubstrat eine feste Katalysatorschicht entsteht, welche mindestens zwei Phasen umfasst, nämlich eine erste Phase, die von dem nunmehr ungelösten polymeren Binder gebildet wird und eine zweite Phase, die von dem partikulären Elektrokatalysator gebildet wird, wobei die zweite Phase in der der ersten Phase dispergiert ist;

e) optional: Trennen des Transfersubstrats von der festen Katalysatorschicht;

f) Bereitstellen einer Ionomerlösung, die mindestens ein zweites Lösemittel und mindestens ein im zweiten Lösemittel gelöstes, Anionen leitendes Polymer enthält, wobei das erste und das zweite Lösemittel identisch oder unterschiedlich sind;

g) Bereitstellen eines textilen Flächengebildes, welches Fasern aus einem polymeren Fasermaterial enthält;

h) Imprägnieren des textilen Flächengebildes mit der Ionomerlösung in Gegenwart der festen Katalysatorschicht, sodass auf der festen Katalysatorschicht eine frische Ionomerschicht entsteht, welche das mit der Ionomerlösung imprägnierte textile Flächengebilde enthält;

i) Abreichern des zweiten Lösemittels aus der frischen Ionomerschicht, sodass auf der festen Katalysatorschicht eine feste Ionomerschicht entsteht, welche das textile Flächengebilde und das nunmehr ungelöste Anionen leitende Polymer umfasst, wobei das textile Flächengebilde in eine von dem Anionen leitenden Polymer gebildeten Matrix vollständig oder teilweise eingebettet ist;

k) falls noch nicht erfolgt: Trennen des Transfersubstrats von der festen Katalysatorschicht;

l) Erhalt des elektrokatalytisch aktiven bzw. aktivierbaren Schichtkörpers, wobei der Schichtkörper die feste Katalysatorschicht und darauf aufgebracht die feste Ionomerschicht aufweist;

bei dem das Bereitstellen des textilen Flächengebildes und das Bereitstellen der Ionomerlösung unter der Maßgabe erfolgt,
dass das polymere Fasermaterial eine erste Wiederholeinheit aufweist, die mindestens zwei Phenylen-Gruppen umfasst,
und dass das Anionen leitende Polymer eine zweite Wiederholeinheit aufweist, die mindestens zwei Phenylen-Gruppen umfasst,
wobei die erste und die zweite Wiederholeinheit identisch oder unterschiedlich sind.

Ein solches Verfahren ist ein erster Gegenstand der Erfindung.

Das erfindungsgemäße Herstellverfahren führt zu einem elektrokatalytisch aktiven bzw. aktivierbaren, Anionen leitenden Schichtkörper mit einer textilen Bewehrung. Bei dem Schichtkörper handelt es sich somit um einen Faserverbund, mit einer Matrix aus dem Ionomer und darin eingebetteten Fasern aus dem Fasermaterial. Ein wesentlicher Aspekt der Erfindung besteht in der Abstimmung des Fasermaterials auf das Membranmaterial: Erfindungsgemäß wird ein textiles Flächengebilde als Bewehrung verwendet, dessen Fasermaterial eine gewisse chemische Ähnlichkeit zu dem Membranmaterial (Ionomer) hat. Bei dieser chemischen Ähnlichkeit wird eine besonders gute Haftung des Ionomers auf der Faser beobachtet, sodass eine sichere Kraftübertragung von der Membran auf die Faser gewährleistet ist. Die durch Quellung in der Membranschicht wirkenden inneren Kräfte werden dank des guten Haftverbundes auf das textile Flächengebilde übertragen und dort unter geringer Dehnung aufgenommen. Dadurch kommt es trotz Quellstress des Ionomers zu einer geringeren Dimensionsänderung des gesamten Schichtkörpers. Die Verstärkung wirkt auch gegen von außen auf den Schichtkörper wirkende Kräfte, die ebenfalls von den Fasern aufgenommen werden. Die Dehnung unter äußeren Kräften ist ebenfalls reduziert. Die geringe Dehnung der Membran kommt auch der Haftung der Katalysatorschicht darauf zu Gute: Das Abplatzen des Katalysators unter äußerer Last wird deutlich reduziert.

Die erwähnte chemische Ähnlichkeit besteht erfindungsgemäß in den Wiederholeinheiten des polymeren Fasermaterials und des Ionomers, die beide jeweils mindestens zwei Phenylen-Gruppen aufweisen. Die Erfindung beruht nämlich auf dem Befund, dass die Haftung zwischen Ionomer und Fasermaterial dann verbessert wird, wenn beide Polymere jeweils zwei Phenylen-Gruppen aufweisen. Der Erfindung innewohnend ist auch die Erkenntnis, dass es sowohl eine Klasse von Anionen leitenden Polymeren gibt, die durch zwei Phenylen-Gruppen gekennzeichnet sind, als auch eine Klasse von Faserpolymeren, welche ebenfalls zwei Phenylen-Gruppen aufweisen. Die Lehre der Erfindung besteht somit darin, das Faserpolymer und das Ionomer nach der Maßgabe auszuwählen, dass beide Stoffe jeweils zwei Phenylen-Gruppen aufweisen.

Es steht zur Vermutung, dass es zu einer chemischen Wechselwirkung zwischen den Phenylen-Gruppen des Faserpolymers und des ionisch leitenden Polymers kommt, welche letztendlich eine besonders stabile Haftung zwischen der Ionomer-Matrix und des darin eingebetteten textilen Flächengebildes bewirkt.

Die so erzielten Bindungskräfte sind so stark, dass eine vollständige Einbettung des textilen Flächengebilde in der Matrix gar nicht erforderlich ist: Es genügt eine teilweise Einbettung. Eine teilweise Einbettung kann punktweise sein oder auch außermittig, sodass die textile Struktur zumindest einseitig erkennbar bleibt. Allerdings darf die Einbettung nicht so geringfügig sein, dass die intrinsische Porosität des textilen Flächengebilde im Schichtkörper erhalten bleibt. Der finale Schichtkörper muss gasdicht sein, um eine Vermischung der bei der Wasserelektrolyse entstehenden Gase Wasserstoff $H_2$ und Sauerstoff $O_2$ zu vermeiden, weil letzteres das Risko einer Knallgasexplosion erhöht. Aus diesem Grunde ist ein Einbettungsgrad einzuhalten, der die Gasundurchlässigkeit des Schichtkörpers gewährleistet. Eine bloße Beschichtung der Fasern, bei der die gasdurchlässigen Poren des textilen Flächengebildes erhalten bleiben, stellt somit keine Einbettung im Sinne der Erfindung dar.

Ein wesentliches Merkmal des vorliegenden Verfahrens ist, dass das textile Flächengebilde in Gegenwart der festen Katalysatorschicht imprägniert wird, also in situ. Dies ist grundsätzlich in zwei Varianten möglich:

In einer ersten Variante erfolgt das Imprägnieren des textilen Flächengebildes mit der Ionomerlösung dadurch, dass das textile Flächengebilde zunächst auf die feste Katalysatorschicht aufgelegt und sodann das auf der festen Katalysatorschicht aufgelegte textile Flächengebilde mit der Ionomerlösung imprägniert wird. In dieser Variante wird also erst das Textil platziert und dann die Ionomerlösung angegossen.

In einer zweiten Variante erfolgt das Imprägnieren des textilen Flächengebildes mit der Ionomerlösung dadurch, dass zunächst die Ionomerlösung auf die feste Katalysatorschicht aufgetragen wird und sodann das textile Flächengebilde in die auf der festen Katalysatorschicht aufgetragenen Ionomerlösung eingetaucht wird. In dieser Variante wird also erst die Ionomerlösung angegossen und dann das Textil eingelegt.

Vorzugsweise wird bei der zweiten Variante zumindest ein Teil des zweiten Lösemittels aus der auf der festen Katalysatorschicht aufgetragenen Ionomerlösung abgereichert, bevor das textile Flächengebilde in die auf der festen Katalysatorschicht aufgetragenen Ionomerlösung eingetaucht wird. Dies hat den Vorteil, dass das textile Flächengebilde nicht so tief in die frische, aber schon angetrocknete Ionomerschicht eintaucht. Es entsteht so ein lotrechter Abstand zwischen der Katalysatorschicht und dem Textil, was die Haftung der Katalysatorschicht erhöht.

Vorzugsweise wird ein Lösemittel verwendet, welches nicht CMR-relevant ist. Beispiele dafür sind Dimethylsulfoxid (DMSO), Ethanol (EtOH), Acetonitril (ACN). Die Lösemittel können sowohl als erstes Lösemittel in der Katalysatortinte als auch als zweites Lösemittel in der Ionomerlösung genutzt werden. Vorzugsweise wird eine der genannten Substanzen für beide Lösemittel genutzt.

In einer bevorzugten Ausführungsform des Verfahrens erfolgt das Abreichern des ersten Lösemittels und/oder des zweiten Lösemittels aus der frischen Katalysatorschicht bzw. aus der frischen Ionomerschicht unvollständig. Daraus folgt, dass die feste Katalysatorschicht bzw. die feste Ionomerschicht einen Lösemittel-Restgehalt aufweist. Der Lösemittel-Restgehalt sollte beim Trennen des Transfersubstrats von der festen Katalysatorschicht zwischen 5 Gew.-% und 30 Gew.-% betragen, bezogen auf die Gesamtmasse der festen Katalysatorschicht bzw. der festen Ionomerschicht. Auf diese Weise wird das Ablösen vom Transfersubstrat erleichtert.

In einer bevorzugten Ausführungsform der Erfindung enthält die Katalysatortinte zusätzlich ein vom Elektrokatalysator verschiedenes, partikuläres anorganisches Material. Dieses Material lässt sich nämlich als Strukturgeber verwenden, welcher der Katalysatorschicht eine Porosität verleiht, indem er erst in die Katalysatorschicht eingebaut und sodann durch Laugung mit wässriger alkalischer Lösung und anschließender Wäsche wieder entfernt wird.

Als partikuläres anorganisches Material eignen sich insbesondere Siliciumdioxid (Silica - $SiO_2$) und Aluminiumoxid (Alumina - $Al_2O_3$) sowie Mischungen daraus (Silica/Alumina). Als wässrige alkalische Lösung kommt eine Lauge von Natrium, Kalium oder Lithium oder ein Gemisch davon in Betracht. Wenn als partikuläres anorganisches Material Siliciumdioxid und als Lauge Kaliumhydroxid (KOH) eingesetzt wird, wird das in der Katalysatorschicht befindliche, partikuläre Siliciumdioxid ($SiO_2$) zu den Produkten Kaliumsilikat ($K_2SiO_3$) und Wasser ($H_2O$) umgewandelt:

$$SiO_2 + 2\ KOH \rightarrow K_2SiO_3 + H_2O \qquad (1)$$

Das Produkt Kaliumsilikat ist wasserlöslich und lässt sich gut aus der Katalysatorschicht auswaschen. Das Produkt Wasser ohnehin.

Wenn anstelle von Kalium ein anders Alkalimetall zur Laugung eingesetzt wird, etwa Lithium oder Natrium, entstehen analog zu Formel (1) Lithiumsilikat bzw. Natriumsilikat.

Wenn als partikuläres anorganisches Material Aluminiumoxid ($Al_2O_3$) eingesetzt wird, bilden sich mit der Lauge wasserlösliche Aluminate. Wird beispielsweise als Lauge Natriumhydroxid (NaOH) verwendet, entsteht gemäß Formel (2) das Produkt Natriumaluminat ($NaAl(OH)_4$):

$$Al_2O_3 + 2\ NaOH + 3\ H_2O \rightarrow 2\ NaAl(OH)_4 \qquad (2)$$

Natriumaluminat ist wasserlöslich und lässt sich leicht auswaschen.

Es ist auch möglich, gleichzeitig partikuläres Silica und partikuläres Alumina oder auch Mischphasen daraus einzusetzen. Dann laufen die oben beschriebenen Reaktionen während der Laugung parallel ab und es werden entsprechend mehrere Produkte parallel erhalten.

Die nach der Laugung in der Katalysatorschicht befindlichen Silikate und/oder Aluminate lassen sich anschließend mit einer wässrigen Lösung aus der Katalysatorschicht auswaschen, sodass die Katalysatorschicht eine Porosität erhält. Das in der Katalysatorschicht enthaltene Polymer und der partikuläre Elektrokatalysator bleiben durch die Laugung und Waschung unbeeinflusst und bilden letztendlich die katalytisch aktive Schicht des fertigen Schichtkörpers. Die Oberfläche der Katalysatorschicht erhält durch die Behandlung offene Poren, nämlich an den Stellen, die vorher durch das anorganische partikuläre Material belegt waren.

Der Massenanteil des von dem Elektrokatalysator verschiedenen, partikulären anorganischen Material (beispielsweise Silica/Alumina) sollte zwischen 10 Gew.% und 40 Gew. % betragen, bezogen auf die Gesamtmasse der trockenen Katalysatorschicht.

Ein zweiter Gegenstand der Erfindung ist ein elektrokatalytisch aktiver bzw. aktivierbarer Schichtkörper, wie er sich durch das erfindungsgemäße Verfahren oder anderweitig herstellen lässt. Ein solcher Schichtkörper weist mindestens die folgenden Merkmale auf:

α) der Schichtkörper umfasst mindestens eine feste Ionomerschicht und mindestens eine feste Katalysatorschicht, wobei die feste Ionomerschicht und die feste Katalysatorschicht über eine Grenzschicht miteinander verbunden sind;

β) die feste Katalysatorschicht umfasst mindestens zwei Phasen, nämlich eine erste Phase, die von mindestens einem polymeren Binder gebildet ist und eine zweite Phase, die von mindestens einem partikulären Elektrokatalysator gebildet ist, wobei die zweite Phase in der der ersten Phase dispergiert ist;

γ) die feste Ionomerschicht umfasst ein in eine Matrix vollständig oder teilweise eingebettetes, textiles Flächengebilde, wobei das textile Flächengebilde ein polymeres Fasermaterial enthält und die Matrix von mindestens einem Anionen leitenden Polymer gebildet ist;

δ) das polymere Fasermaterial weist eine erste Wiederholeinheit auf, die mindestens zwei Phenylen-Gruppen umfasst;

ε) das Anionen leitende Polymer weist eine zweite Wiederholeinheit auf, die mindestens zwei Phenylen-Gruppen umfasst;

ζ) die erste und die zweite Wiederholeinheit sind identisch oder unterschiedlich.

Vorzugsweise erstreckt sich das textile Flächengebilde außerhalb der Grenzschicht, also mit einem gewissen Lotrechten Abstand zur Katalysatorschicht. Dies bewirkt eine bessere Haftung der Katalysatorschicht auf der Ionomerschicht. Die Lotrechte Richtung bezieht sich auf die Ebene des textilen Flächengebildes bzw. der Katalysatorschicht.

Die Grenzschicht sollte aber nicht zu dick werden. Vorzugsweise beträgt die Stärke der Grenzschicht weniger als 40% der Stärke s des gesamten Schichtkörpers.

Der katalytisch aktive bzw. aktivierbare Schichtkörper lässt sich als elektrokatalytisch aktive bzw. aktivierbare Anionenaustauschmembran in einem elektrochemischen Prozess einsetzen. Eine solche Verwendung ist ein dritter Gegenstand der Erfindung.

Vorzugsweise wird der Schichtkörper in einem Verfahren zur Herstellung von Wasserstoff und Sauerstoff durch Elektrolyse von Wasser im alkalischen Milieu (AEMWE) eingesetzt. Die Verwendung erfolgt dadurch, dass die Elektrolyse in Gegenwart des Schichtkörpers erfolgt.

Ein vierter Gegenstand der Erfindung ist ein Elektrolyseur, welcher mit einem erfindungsgemäßen Schichtkörper ausgerüstet ist.

Bezüglich aller hier vorgestellter Gegenstände der Erfindung gilt, dass es sich bei dem textilen Flächengebilde vorzugsweise um ein Gewebe oder um ein Gelege oder um ein Gewirk oder um ein Gestrick oder um einen Vliesstoff handelt.

Ebenso ist es für alle Erfindungsgegenstände vorteilhaft, wenn der der polymere Binder eine dritte Wiederholeinheit aufweist, die mindestens zwei Phenylen-Gruppen umfasst, wobei die zweite und die dritte Wiederholeinheit identisch oder unterschiedlich sind, und wobei die erste und die dritte Wiederholeinheit identisch oder unterschiedlich sind. Auf diese Weise entsteht auch eine chemische Ähnlichkeit zwischen Fasermaterial, Ionomer und Binder der Katalysatorschicht, wodurch die Haftung der Katalysatorschicht auf den anderen Komponenten des Schichtkörpers deutlich erhöht wird.

Für alle Gegenstände der Erfindung ist es bevorzugt, wenn die in dem Anionen leitenden Polymer enthaltene zweite Wiederholeinheit mindestens zwei über eine Einfachbindung verbundene Phenylen-Gruppen umfasst. Derartige Ionomere sind beispielsweise aus der WO2024151961A1 (Formula II) oder aus Figur 2 der WO 2019068051 A2 bekannt.

Alternativ kann das Anionen leitende Polymer und/oder das polymere Fasermaterial jeweils mindestens eine zwei aromatische Sechsringe verbindende Etherbrücke, sowie wahlweise eine Sulfonyl-Gruppe oder eine Carbonyl-Gruppe aufweisen. Die Carbonyl-Gruppe bzw. die Sulfonyl-Gruppe kann vorzugsweise zwei Phenylen-Gruppen verbinden.

Beispiele für Anionen leitende Polymere mit dieser Struktur finden sich in EP3770201B1, EP4032934B1 und EP4059988A1

Besonders bevorzugt wird ein Anionen leitendes Polymer und/oder ein polymerer Binder eingesetzt, welches bzw. welcher die folgende Struktur (I) aufweist:

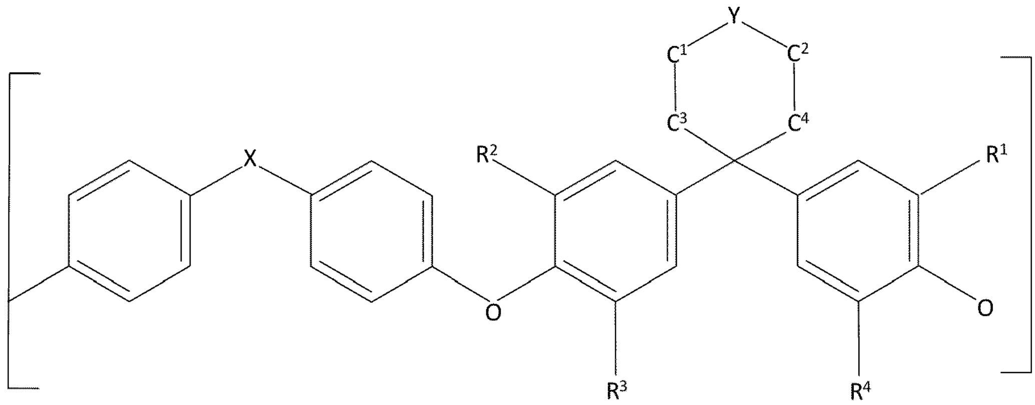

(I)

worin in (I) X für die Carbolyl- bzw. Sulfonyl-Gruppe steht;

worin in (I) Y ein Strukturelement ist, das ein Stickstoffatom mit einer positiven Ladung umfasst, das an $C^1$ und $C^2$ gebunden ist und über zwei Bindungen an einen oder zwei Kohlenwasserstoffreste mit eins bis zwölf oder eins bis sechs oder eins bis fünf Kohlenstoffatomen gebunden ist,

worin in (I) $R^1$, $R^2$, $R^3$ und $R^4$ gleiche oder verschiedene Alkylgruppen mit eins bis vier Kohlenstoffatomen sind.

Alternativ wird ein Anionen leitendes Polymer und/oder ein polymerer Binder eingesetzt, welches bzw. welcher die folgende Struktur (II) aufweist:

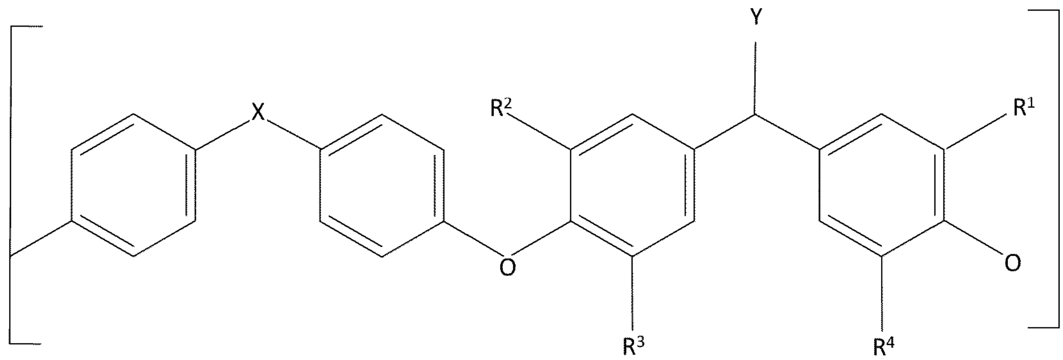

(II)

worin in (II) X für die Carbolyl- bzw. Sulfonyl-Gruppe steht;

worin in (II) Y ein Strukturelement ist, das ein Stickstoffatom mit einer positiven Ladung umfasst, worin in (II) $R^1$, $R^2$, $R^3$ und $R^4$ gleiche oder verschiedene Alkylgruppen mit eins bis vier Kohlenstoffatomen sind.

Die polymere mit den Strukturen (I) bzw. (II) eignen sich sowohl als Ionomer in der Ionomerschicht als auch als Binder in der Katalystorschicht.

Als Fasermaterial wird besonders bevorzugt ein Polyetherkethon (PEK) oder ein Polyetheretherketon (PEEK) oder ein sulfoniertes Polyetheretherketon (SPEEK) oder ein teilsulfoniertes Polyetheretherketon (SPEEK) verwendet. Da die Polymerklasse der Polyetherketone jeweils eine Wiederholeinheit mit mindestens zwei Phenylen-Gruppen aufweisen, bilden sie einen besonders festen Verbund mit den oben genannten Ionomeren.

Der Schichtkörper sollte möglichst gasdicht sein, damit die beider Wasserelektrolyse entstehenden Gase Wasserstoff und Sauerstoff nicht durch den Schichtkörper hindurchdiffundieren und sich zu Knallgas vermischen. Die Gasdurchlässigkeit von porösen Stoffen lässt sich gemäß ISO 5636-5:2013 über die Gurley-Zahl bestimmen. Die Gurley-Zahl beschreibt die Zeit, welche eine definierte Gasmenge benötigt, um durch eine definierte Fläche des porösen Stoffes zu diffundieren. Je höher die Gurley-Zahl, desto gasdichter ist der Stoff. Der Schichtkörper sollte eine nach ISO 5636-5:2013 bestimmte Gurley-Zahl von über 16 h aufweisen. Dies bedeutet, dass der Schichtkörper hinreichend gasdicht ist.

Eine solche Gasdichtigkeit setzt voraus, dass das Textil hinreichend tief in der Ionomerschicht eingebettet ist, sodass die textilen Poren von dem Ionomer verschlossen sind. Außerdem sollte die Ionomerschicht eine gewisse Mindestdicke haben. Die Katalysatorschicht trägt hingegen nichts zur Gasdichtigkeit bei, weil diese porös sein sollte, um die katalytisch aktiven Zentren für den Elektrolyten zugänglich zu halten.

Hinsichtlich der Dimensionierung von Katalysatorschicht und Ionomerschicht ist es vorteilhaft, die folgenden Beziehungen einzuhalten:

$$0.05*s < k < 0.4*s$$

und

$$1.5*k < i < 15*k$$

Darin steht s für die Stärke des gesamten Schichtkörpers, k für die Stärke der Katalysatorschicht / für die Stärke der Ionomerschicht. Die Gesamtstärke s des Schichtkörpers sollte in einem Bereich von 40 µm bis 100 µm liegen.

In einer bevorzugten Ausführungsform der Erfindung wird das textile Flächengebilde nicht bis auf die Katalysatorschicht herunter gedrückt, sodass noch ein Abstand zwischen dem textilen Flächengebilde und der Katalysatorschicht eingehalten wird, wobei der Abstand lotrecht zu der Ebene des textilen Flächengebildes bzw. der Katalysatorschicht ausgerichtet ist. Auf diese Weise entsteht zwischen der Ionomerschicht und der Katalysatorschicht eine Grenzschicht, welche frei von dem textilen Flächengebilde und frei von Elektrokatalysator ist. Die Grenzschicht wird von dem Ionomer gebildet. Die Grenzschicht sollte eine Stärke *g* aufweisen, die in folgendem Bereich liegt:

$$0.01*s < g < 0.4*s$$

worin *s* wieder für die Gesamtstärke des Schichtkörpers steht.

Das textile Flächengebilde kann einer Behandlung mit einer Corona-Elektrode unterzogen worden sein. Auf diese Weise steigt seine Oberflächenenergie und damit die Benetzungsfähigkeit. Da der Effekt dieser Maßnahme zeitlich begrenzt anhält, sollte die Corona-Behandlung möglichst zeitnah vor der Imprägnierung des Textils mit dem Ionomer erfolgen.

Figurenbeschreibung

Die Erfindung soll nun anhand von Figuren näher erläutert werden. Hierfür zeigen schematisch:

Fig. 1: Auftragen Katalysatorschicht;
Fig. 2: Frische Katalysatorschicht;
Fig. 3: Trocknen der Katalysatorschicht;
Fig. 4: Feste Katalysatorschicht;
Fig. 5: Auftragen Ionomerschicht;
Fig. 6: Frische Ionomerschicht;
Fig. 7: Einlegen textiles Flächengebilde;
Fig. 8: Trocknen Ionomerschicht;
Fig. 9: Ablösen Transfersubstrat;
Fig. 10: Finaler Schichtkörper.

Zunächst wird ein Transfersubstrat 1 bereit gestellt. Bei dem Transfersubstrat handelt es sich beispielsweise um eine flache Glasplatte oder um eine Folie aus Polyethylenterephthalat (PET).

Zusätzlich wird eine Katalysatortinte 2 bereit gestellt. Dabei handelt es sich um ein mehrphasiges Gemisch enthaltend den eigentlichen Elektrokatalysator 3 in partikulärer, fester Form. Bei dem Elektrokatalysator 3 handelt es sich beispielsweise um einen üblichen Pt/C-Katalysator. Das ist beispielsweise ein Graphit-Träger, der mit Platin gespickt ist. Als weiteren Bestandteil enthält die Katalysatortinte 2 einen polymeren Binder 4, welcher in einem ersten Lösemittel 5 gelöst ist. Der feste partikuläre Elektrokatalysator 3 und der flüssige, gelöste Binder 4 geben der Katalysatortinte 2 insgesamt eine dickflüssige bis breiige Konsistenz. Die Katalysatortinte 2 kann auch weitere Zusatzstoffe enthalten, die hier nicht näher beschrieben werden müssen.

Die Katalysatortinte 2 wird auf das Transfersubstrat 1 aufgetragen. Das kann beispielsweise mit einem Rakelprozess erfolgen.

Nach dem Auftragen befindet sich auf einer Seite des Transfersubstrats 1 eine frische Katalysatorschicht 6; vgl. Figur 2.

Die frische Katalysatorschicht 6 wird einer Trocknung unterworfen, wobei zumindest ein Teil des ersten Lösemittels 5 aus der frischen Katalysatorschicht 6 abdampft (Figur 3). Dadurch fällt der Binder 4 aus der Lösung aus und bildet eine feste Phase, welche den Elektrokatalysator 3 umschließt.

Wenn die Trocknung abgeschlossen ist (Figur 4), befindet sich auf dem Transfersubstrat eine feste Katalysatorschicht 7, welche zwei Phasen umfasst, nämlich eine erste Phase gebildet von dem nunmehr festen Binder 4 und eine zweite Phase, die von dem partikulären Elektrokatalysator 3 gebildet wird. Die zweite Phase ist in der ersten Phase dispergiert.

Sodann wird eine flüssige bis pastöse Ionomerlösung 8 bereitgestellt. Die Ionomerlösung umfasst ein Anionen leitendes Polymer 9, welches in einem zweiten Lösemittel 10 gelöst ist. Bei dem zweiten Lösemittel 10 der Ionomerlösung 8 kann es sich um dieselbe Substanz handeln wie bei dem ersten Lösemittel 5 der Katalysatortinte 2. Es können aber auch unterschiedliche Lösemittel 5, 10 eingesetzt werden.

Die flüssige Katalysatortinte 2 wird auf die feste Katalysatorschicht 7 aufgetragen, etwa durch Rakeln oder durch Sprühen (Figur 5). Auf diese Weise entsteht auf der festen Katalysatorschicht 7 eine frische Ionomerschicht 11 (Figur 6).

Nun wird ein textiles Flächengebilde 12 bereitgestellt. Bei dem textilen Flächengebilde 12 kann es sich beispielsweise um ein Gewebe handeln oder um einen Vliesstoff. Es umfasst Fasern aus einem polymeren Fasermaterial, welches eine chemische Ähnlichkeit zu dem in der frischen Ionomerschicht 11 befindlichen, noch gelösten, Anionen leitenden Polymer 9 aufweist. Die Ähnlichkeit besteht in dem Vorhandensein zweier Phenylen-Gruppen in einer Wiederholeinheit sowohl des Faser-Polymeres als auch des Ionomers.

Das textile Flächengebilde 12 wird nun in die noch frische Ionomerschicht 11 eingelegt (Figur 7), sodass das textile Flächengebilde 12 mit der Ionomerlösung 8 imprägniert wird. Dabei saugen sich die Poren des textilen Flächengebildes 12 aufgrund des Kapillareffekts mit Ionomerlösung 8 voll. Der Kapillareffekt wurde durch eine Corona-Behandlung des textilen Flächengebildes 12 zuvor erhöht. Wichtig ist, dass das Imprägnieren in Gegenwart der festen Katalysatorschicht 7 erfolgt. Dies wird bei der in Figur 7 dargestellten Verfahrensvariante dadurch realisiert, dass sich die frische Ionomerschicht 11 bereits auf der festen Katalysatorschicht 7 befindet, wenn das textilen Flächengebildes 12 mit der Ionomerlösung 8 imprägniert wird. Alternativ ist es möglich, das textile Flächengebilde 12 auf die noch unbeschichtete feste Katalysatorschicht 7 aufzulegen und erst dann die Ionomerlösung 8 aufzugießen. Dadurch wird die frische Ionomerschicht 11 während des Imprägnierens erzeugt.

Unabhängig von der Reihenfolge der Schichtbildung und der Imprägnierung wird die frische Ionomerschicht 11 mit dem darin befindlichen textilen Flächengebilde 12 einer Trocknung unterworfen, wobei zumindest ein Teil des zweiten Lösemittels 10 aus der frischen Ionomerschicht 11 abdampft (Figur 8). Dadurch fällt das Anionen leitende Polymer 9 aus der Lösung aus und bildet eine feste Ionomerschicht 13 auf der festen Katalysatorschicht 7. Das textile Flächengebilde 12 wird dabei in die feste Ionomerschicht 13 eingebettet. Dank der chemischen Ähnlichkeit zwischen polymeren Fasermaterial und Anionen leitenden Polymer 9 entsteht eine starke Haftung zwischen der festen Ionomerschicht 13 und dem textilen Flächengebilde 12. Die feste Ionomerschicht 13 und die feste Katalysatorschicht 7 sind über eine Grenzschicht 14 miteinander direkt kontaktiert. Die Grenzschicht 14 ist idealiter infinitesimal dünn, wird in der Praxis aber einen Übergangsbereich darstellen, insbesondere dann, wenn das in der Ionomerlösung 8 enthaltene zweite Lösemittel 10 den in der festen Katalysatorschicht 7 enthaltenen Binder 4 zu lösen vermag.

Sodann wird die feste Katalysatorschicht 7 von dem Transfersubstrat 1 abgelöst. Dies kann auch schon früher erfolgen, etwa nach dem Trocknen der frischen Katalysatorschicht 6 und vor dem Auftragen der frischen Ionomerschicht (nach Figur 3 und vor Figur 5). Es ist auch möglich, das Transfersubstrat 1 abzulösen, wenn die frische Katalysatorschicht 6 noch nicht vollständig getrocknet ist (während Figur 3). Dies hat den Vorteil, dass sich das Transfersubstrat 1 dann noch einfacher entfernen lässt.

im Ergebnis wird ein Schichtkörper 15 erhalten, welcher zumindest die feste Katalysatorschicht 7 und die feste Ionomerschicht 13 mit dem darin eingebetteten textilen Flächengebilde 13 umfasst. Wie in den Figuren zu erkennen, ist das textile Flächengebilde 12 nicht vollständig, sondern lediglich teilweise in die feste Ionomerschicht 13 eingebettet. Ein

Teil der Fasern steht oben über. Die Grenzschicht 14 ist aufgrund ihres Übergangcharakters kein eigenständiger Teil Schichtkörpers 15. Ihre Stärke g geht gegen null. Da das Transfersubstrat 1 abgelöst wurde, bildet dies ebenfalls keinen Teil des Schichtkörpers 15.

Die feste lonomerschicht 13 des Schichtkörpers bildet eine geschlossene Anionen leitende Schicht und fungiert daher als Anionenaustauschmembran. Der in der festen Katalysatorschicht 7 enthaltene partikuläre Elektrokatalysator verleiht dem Schichtkörper 15 seine katalytische Aktivität. Der Elektrokatalysator 3 ist über den Binder 4 auf dem Membran / lonomerschicht 13 immobilisiert. Der gesamte Schichtkörper und insbesondere die lonomerschicht 13 ist über das textile Flächengebilde 12 mechanisch verstärkt.

Da das textile Flächengebilde 12 teilweise aus der festen lonomerschicht 13 heraus schaut, ist die Summe der Stärke *i* der festen lonomerschicht 13 und der Stärke *k* der festen Katalysatorschicht 7 kleiner als die Stärke s des gesamten Schichtkörpers. Anders als in der Figur 10 dargestellt, kann die Stärke i der festen lonomerschicht 13 auch größer sein als die Stärke *k* der festen Katalysatorschicht 7. Die Stärke *s* des gesamten Schichtkörpers 15 liegt im Bereich von etwa 50 μm bis 100 μm.

Beispiele

Die mit der Erfindung erzielten Effekte sollen nun experimentell belegt werden. Hierfür zeigen:

Figur 11: Dehnungs-Spannungskennlinie verschiedener Schichtkörper;

Figur 12: Strom-Spannungskennlinie verschiedener Schichtkörper;

Figur 13: Fotographie von Schichtkörper C (nicht erfindungsgemäß) nach der Elektrolyse;

Figur 14: Fotografie von Schichtkörper D mit Verstärkungsgewebe nach der Elektrolyse;

Figur 15: Fotografie von Schichtkörper E mit Verstärkungsgewebe und Silica nach der Elektrolyse;

Figur 16: REM Aufnahme von erfindungsgemäßem Schichtkörper in Seitenansicht;

Figur 17: REM Aufnahme von erfindungsgemäßen Schichtkörper in Unteransicht;

Figur 18: REM Aufnahme von erfindungsgemäßen Schichtkörper in vergrößerter Seitenansicht;

Figur 19: Linienprofil konventionell hergestellter Schichtkörper (Beispiel 8);

Figur 20: 3D-Darstellung Oberfläche Katalysatorschicht konventionell hergestellter Schichtkörper (Beispiel 8);

Figur 21: Linienprofil erfindungsgemäß hergestellter Schichtkörper (Beispiel 10);

Figur 22: 3D-Darstellung Oberfläche Katalysatorschicht erfindungsgemäß hergestellter Schichtkörper (Beispiel 10).

Eine Übersicht der in den Beispielen 6 bis 9 hergestellten Schichtkörper bietet Tabelle 1:

Tabelle 1: Übersicht der hergestellten Schichtkörper

| Beispiel Nr. | Schichtkörper | Textil | Silica | Qualifikation |
|---|---|---|---|---|
| 6 | A | nein | ja | nicht erfindungsgemäß |
| 7 | B | nein | ja | nicht erfindungsgemäß |
| 8 | C | ja | ja | nicht erfindungsgemäß |
| 9 | D | ja | nein | erfindungsgemäß |
| 10 | E | ja | ja | erfindungsgemäß |

*1. Herstellung eines lonomers (nicht Teil der Erfindung)*

Ein Anionen leitendes, kationisches Polymer wurde entsprechend Beispiel 3 der EP3770201A1 synthetisiert.

Anschließend wurde dieses für 7 Tage in Vakuumtrockenofen bei 60 °C getrocknet. Anschließend wurde daraus eine 5 wt% Lösung in DMSO angesetzt. Dafür wurden 5 Gewichtsteile des trockenen Polymers in ein Gefäß gegeben und 95 Gewichtsteile DMSO hinzugefügt. Das Gefäß wurde fest verschlossen und bei 60 °C der Inhalt für 2 Tage mittels Magnetrührer bei 100 RPM verrührt.

*2. Herstellung einer Anionenaustauschmembran (nicht Teil der Erfindung)*

Sodann wurde aus dem in 1. synthetisierten, kationischen Polymer eine Anionen leitende Membran hergestellt, wie in Beispiel 4 der EP3770201A1 beschrieben.

*3. Bereitstellen einer Katalysatortinte ohne Silica (Teil der Erfindung)*

Ein Schraubdeckelglas wurde bis zu einem Drittel mit Yttrium-stabilisierten Zirkonoxid Mahlkugeln (Durchmesser 5 mm) gefüllt. Anschließend wurden zwei Gewichtsteile Katalysatorpulver (Platin auf Kohlenstoff 50% Platinbeladung) in das Gefäß eingefüllt. Danach wurden dazu 19 Gewichtsteile Wasser hinzugefügt, das Deckelglas verschlossen und für eine Minute mittels Vortex-Schüttler (Modell "lab dancer", IKA) geschüttelt. Das Gefäß wurde wieder geöffnet, 19 Gewichtsteile Ethanol hinzugefügt, wieder verschlossen und erneut eine Minute geschüttelt. Anschließend wurde das Gefäß abwechseln für mindestens fünf Stunden bei 60 U/min auf einen Kipp-/Rollmischer und für fünf Minuten in ein Ultraschallbad (180 W) gelegt. Dies wurde zweimal wiederholt. Es wurden jeweils 76 Teile Wasser und 76 Teile Ethanol hinzugefügt und eine Minute mittels Vortex-Schüttler geschüttelt. Zuletzt wurde eine Ionomerlösung (5% Ionomer in DMSO; wie in 1. hergestellt) hinzugefügt, bis der Feststoffanteil des Ionomers 14% des Gesamtfeststoffanteils ausmachte, das Gefäß verschlossen, die Lösung für eine Stunde auf dem Kipp-/Rollmischer gerollt und schließlich für fünf Minuten im Ultraschallbad bei 180 W gelegt.

*4. Bereitstellen einer Katalysatortinte mit Silica (Teil der Erfindung)*

Die Herstellung mittels Silica erfolgte weitgehend analog zu der oben unter 3. beschriebenen Herstellung der Katalysatortinte ohne Silica, jedoch wurde bei der letzten Zugabe von Wasser und Ethanol zusätzlich das Silica hinzugegeben:
Das Schraubdeckelglas wurde bis zu einem Drittel mit Yttrium stabilisierte Zirkonoxid Mahlkugeln (Durchmesser 5 mm) gefüllt. Anschließend wurden zwei Gewichtsteile Katalysatorpulver (Platin auf Kohlenstoff 50% Platinbeladung) in das Gefäß eingefüllt. Danach wurden dazu 19 Gewichtsteile Wasser hinzugefügt, das Deckelglas verschlossen und für eine Minute mittels Vortex-Schüttler (Modell "lab dancer", IKA) geschüttelt. Das Gefäß wurde wieder geöffnet, 19 Gewichtsteile Ethanol hinzugefügt, wieder verschlossen und erneut eine Minute geschüttelt. Anschließend wurde das Gefäß abwechselnd für mindestens fünf Stunden bei 60 U/min auf einen Kipp-/Rollmischer und für fünf Minuten in ein Ultraschallbad (180 W) gelegt. Dies wurde zweimal wiederholt. Es wurden 0.6 Gewichtsteile Silica sowie jeweils 76 Teile Wasser und 76 Teile Ethanol hinzugefügt und 1 Minute mittels Vortex-Schüttler geschüttelt. Die Zugabe des Silica erfolgte in Form einer Silica mit einer BET-Oberfläche von 300 $m^2/g$ (AEROSIL® 300), in Dispersion in Wasser mit 10% Feststoffanteil. Die Wassermenge in der Dispersion wurde bei der Gesamtmenge des hinzugegebenen Wassers berücksichtigt.

Zuletzt wurde Ionomerlösung (5% Ionomer gemäß 1. hergestellt, gelöst in DMSO) hinzugefügt bis der Feststoffanteil des Ionomers 14% des Gesamtfeststoffanteils ausmachte, das Gefäß verschlossen, die Lösung für eine Stunde auf dem Kipp-/Rollmischer gerollt und schließlich für fünf Minuten im Ultraschallbad bei 180 W gelegt.

*5. Beschichtung des Transfersubstrats mit der Silica enthaltenden Katalysatortinte (Teil der Erfindung)*

Für den erfindungsgemäßen Versuch (mit Silica) wurde die unter 4. bereitgestellte Tinte mittels Sprühbeschichter auf ein Transfersubstrat aufgetragen. Bei dem Transfersubstrat handelte es sich um eine PET-Folie. Während der Beschichtung wurde die PET-Folie auf einer auf 60°C beheizten Oberfläche fixiert.

Die Beschichtungsparameter wurden angepasst, um mit etwa 90 Lagen eine homogene Platinflächenbeladung von 0.45 $mg_{Pt} / cm^2$ zu erreichen. Es wurde darauf geachtet, dass jede einzelne Lage weitgehend getrocknet war, bevor die jeweils nächste Lage aufgetragen wurde. Zuletzt wurde die beschichtete PET-Folie für 30 Minuten auf der beheizten Oberfläche final getrocknet.

Auf diese Weise wurde eine PET-Folie erhalten, die mit einer trockenen Katalysatorschicht enthaltend Silica versehen war.

*6. Herstellen eines Schichtkörpers A ohne Verstärkung (nicht Teil der Erfindung)*

Aus dem in 1. synthetisierten, kationischen Polymer wurde eine Ionomerschicht auf die Silica-haltige Katalysatorschicht der in 5. erhaltenen PET-Folie aufgetragen. Dieser Vorgang erfolgte wie in Beispiel 4 der EP3770201A1 beschrieben, jedoch mit dem Unterschied, dass hier die in 5. erhaltene, katalysatorbeschichtete PET-Folie anstelle einer unbeschichteten Glasplatte verwendet wurde.

Nach dem Trocknen der Ionomerschicht wurde ein Schichtkörper A erhalten mit der Silica-haltigen Katalysatorschicht und darauf aufgebracht die Ionomerschicht. Der Schichtkörper wurde unter Zuhilfenahme von Wasser vorsichtig von der PET-Folie abgelöst.

Schichtkörper A lässt sich bereits wie eine herkömmliche, katalytisch aktive Anionenaustauschmembran in der alkalischen Wasserelektrolyse einsetzen. Um maximale Elektrolyseeffizienz zu erzielen ist jedoch ein Formierungsschritt erforderlich, der jedoch auch in einer Elektrolysezelle durchgeführt werden kann. In diesem Fall wurde die Laugung vor dem Einbau in die Elektrolysetestzelle durchgeführt. Hierfür wurde der Schichtkörper für 3 Stunden in 1 M KOH bei Raumtemperatur eingelegt.

7. *Konventionell hergestellter Schichtkörper 8 mit Silica ohne Verstärkung (nicht Teil der Erfindung)*

Für den Versuch mit Silica wurde die unter 4. bereitgestellte Katalysatortinte mittels Sprühbeschichter auf ein Substrat aufgetragen. Bei dem Substrat handelte es sich um die in 2. bereitgestellte, Anionen leitende Membran. Während der Beschichtung wurde die Membran auf einer auf 60°C beheizten Oberfläche fixiert.

Die Beschichtungsparameter wurden angepasst, um mit etwa 90 Schichten eine homogene Platinflächenbeladung von 0.45 $mg_{Pt}$ / $cm^2$ zu erreichen. Es wurde darauf geachtet, dass jede einzelne Schicht weitgehend getrocknet war, bevor die jeweils nächste Schicht aufgetragen wurde. Zuletzt wurde die beschichtete Membran für 30 Minuten auf der beheizten Oberfläche final getrocknet.

Auf diese Weise wurde ein Schichtkörper B erhalten. Bei dem Schichtkörper B handelt es sich um eine CCM, welche sich in der alkalischen Wasserelektrolyse einsetzen lässt. Zur besseren Vergleichbarkeit wurde auch hier die Laugung vor dem Einbau in die Elektrolysetestzelle durchgeführt. Hierfür wurde der Schichtkörper für 3 Stunden in 1 M KOH bei Raumtemperatur eingelegt.

*8. Konventionell hergestellter Schichtkörper C mit Silica und Verstärkung.*

Hierfür wurde zunächst eine Gewebeverstärkte Membran hergestellt.

Dafür wurde aus dem in 1. synthetisierten, kationischen Polymer eine Ionomerschicht auf eine PET-Folie aufgetragen. Dieser Vorgang erfolgte wie in Beispiel 4 der EP3770201A1 beschrieben, jedoch mit dem Unterschied, dass eine PET-Folie anstelle einer unbeschichteten Glasplatte verwendet wurde.

In die frische Polymerschicht, welche später die Membran bildet, wurde ein PEEK Verstärkungsgewebe (40 µm Faserdurchmesser, 70 % offene Fläche) flächig flach eingedrückt und der so erhaltene verstärkte Membrankörper getrocknet.

Anschließend wurde analog zu Beispiel 7 wurde ein Schichtkörper C hergestellt, jedoch unter Verwendung des verstärkte AEM Membrankörpers.

*9. Herstellung eines Schichtkörpers D mit Verstärkung (erfinderisch)*

Die unter 3. bereitgestellte Katalysatortinte wurde mittels Sprühbeschichter in mehreren Lagen auf ein Transfersubstrat aufgetragen. Bei dem Transfersubstrat handelte es sich um eine planare Glasplatte. Während der Beschichtung wurde die PET-Folie auf einer beheizten (60 °C) Oberfläche fixiert.

Die Beschichtungsparameter wurden angepasst, um mit etwa 90 Lagen eine homogene Platinflächenbeladung von 0.45 $mg_{Pt}$ / $cm^2$ zu erreichen. Es wurde darauf geachtet, dass jede einzelne Lage weitgehend getrocknet war, bevor die jeweils nächste Lage aufgetragen wurde. Zuletzt wurde die beschichtete Glasplatte für 30 Minuten auf der beheizten Oberfläche final getrocknet.

Auf diese Weise wurde eine PET-Folie erhalten, die mit einer trockenen Katalysatorschicht versehen war.

Sodann wurde aus dem in 1. synthetisierten, kationischen Polymer eine Ionomerschicht auf die trockene Katalysatorschicht der PET-Folie aufgetragen. Dieser Vorgang erfolgte wie in Beispiel 4 der EP3770201A1 beschrieben, jedoch mit dem Unterschied, dass die hier erhaltene, katalysatorbeschichtete PET-Folie anstelle einer unbeschichteten Glasplatte verwendet wurde.

In die frische Ionomerschicht, welche später die Membran bildet, wurde ein PEEK Verstärkungsgewebe (40 µm Faserdurchmesser, 70 % offene Fläche) flächig flach eingedrückt.

Nach dem Trocknen der Ionomerschicht wurde ein Schichtkörper D erhalten mit der Katalysatorschicht und darauf aufgebracht die Ionomerschicht mit eingebetteten PEEK Verstärkungsgewebe. Das Verstärkungsgewebe wurde nach Trocknung der Ionomers Bestandteil des Schichtkörpers, stützt und verstärkt diesen mechanisch. Schichtkörper D wurde von der PET-Folie vorsichtig abgelöst.

*10. Herstellung eines Schichtkörpers E mit Verstärkung und mit Silica (erfinderisch)*

Die unter 4. bereitgestellte, Silica haltige Katalysatortinte wurde mittels Sprühbeschichter in mehreren Lagen auf ein Transfersubstrat aufgetragen. Bei dem Transfersubstrat handelte es sich um eine planare PET-Folie. Während der Beschichtung wurde die PET-Folie auf einer beheizten (60 °C) Oberfläche fixiert.

Die Beschichtungsparameter wurden angepasst, um mit etwa 90 Lagen eine homogene Platinflächenbeladung von 0.45 $mg_{Pt}$ / $cm^2$ zu erreichen. Es wurde darauf geachtet, dass jede einzelne Lage weitgehend getrocknet war, bevor die jeweils nächste Lage aufgetragen wurde. Zuletzt wurde die beschichtete Glasplatte für 30 Minuten auf der beheizten Oberfläche final getrocknet.

Auf diese Weise wurde eine PET-Folie erhalten, die mit einer trockenen Katalysatorschicht versehen war.

Sodann wurde aus dem in 1. synthetisierten, kationischen Polymer eine Ionomerschicht auf die trockene Katalysatorschicht der PET-Folie aufgetragen. Dieser Vorgang erfolgte wie in Beispiel 4 der EP3770201A1 beschrieben, jedoch mit dem Unterschied, dass die hier erhaltene, katalysatorbeschichtete PET-Folie anstelle einer unbeschichteten Glasplatte verwendet wurde.

In die frische Ionomerschicht, welche später die Membran bildet, wurde ein PEEK Verstärkungsgewebe (40 μm Faserdurchmesser, 70 % offene Fläche) flächig flach eingedrückt.

Nach dem Trocknen der Ionomerschicht wurde ein Schichtkörper E erhalten mit der Silica haltigen Katalysatorschicht und darauf aufgebracht die Ionomerschicht mit eingebetteten PEEK Verstärkungsgewebe. Das Verstärkungsgewebe wurde nach Trocknung der Ionomers Bestandteil des Schichtkörpers, stützt und verstärkt diesen mechanisch. Schichtkörper E wurde von der PET-Folie vorsichtig abgelöst. Zur besseren Vergleichbarkeit wurde auch hier die Laugung vor dem Einbau in die Elektrolysetestzelle durchgeführt. Hierfür wurde der Schichtkörper für 3 Stunden in 1 M KOH bei Raumtemperatur eingelegt.

*11. Untersuchung der mechanischen Eigenschaften der nassen Schichtkörper*

Von den Schichtkörpern A, B, D und E wurden hierfür jeweils drei Teststreifen von 6 cm x 1 cm geschnitten und für 1 Stunde in deionisiertes Wasser eingelegt. Auf diese Weise wurde ein gequollener Zustand ähnlich wie im Gebrauch simuliert. Anschließend wurden die Teststreifen einzeln mittels Zugprüfungsmaschine (ZwickRoell) unter gleichen Bedingungen vermessen. Die (mittleren) charakteristischen Dehnungs-Spannungskennlinien sind in Figur 11 gezeigt. Hierbei ist zu erkennen, dass im gesamten Dehnungsregime die Standardkraft des Schichtkörpers A (lang gestrichelte Linie) am geringsten ist, was für deren relativ schwachen mechanischen Belastbarkeit spricht. Schichtkörper B weist wesentlich höhere Kräfte bei gleicher Ausdehnung auf (kurz gestrichelte Linie). Jedoch erreicht die Kraft ein Plateau bereits bei einer Dehnung von ~3 % und einer Standardkraft von 18.5 MPa und geht dann in ein viskoelastisches Verhalten über. Schichtkörper D (durchgezogene Linie) und Schichtkörper E (gepunktete Linie) weisen insbesondere bei Dehnungen von >3 % eine wesentlich erhöhte Standardkraft im Vergleich zu derer der beiden unverstärkten Schichtkörpern auf. Dies zeigt, dass das Problem der schlechten mechanischen Eigenschaften mittels des erfinderischen Ansatzes gelöst wurde.

*12. Beurteilung der Eignung der erfinderisch hergestellten Schichtkörpern in der Wasserelektrolyse.*

Hierfür wurden die Schichtkörper C, D und E in der AEM Wasserelektrolyse getestet.

Die beschichteten und gelaugte Schichtkörper wurden mit aktiver Pt/C katalysatorbeschichteter Fläche von 25 $cm^2$ wurde in einer Elektrolysetestzelle getestet. Hierbei diente die Katalysatorschicht als Kathodenkatalysator. Anodenseitig wurde eine formstabile poröse Edelstahlelektrode verwendet. Die Messzelle wurde während der Elektrolyseversuche auf 60 °C temperiert und anoden- sowie kathodenseitig mit 1 M KOH Lösung durchspült. Die charakteristische Strom-Spannungskennlinie ist in Figur 12 aufgezeichnet. Die Kennlinien sind für die jeweiligen Schichtkörper markiert. Es ist ersichtlich, dass die elektrische Spannung bei jeweils gleicher Stromstärke für die Schichtkörper C, D und E relativ ähnlich ist, wobei die Schichtkörper D (ohne Silica) wie man erwarten könnte etwas höher liegt was eine etwas geringere Elektrolyseeffizienz bedeutet. Nichtsdestotrotz sind alle hergestellten Schichtkörper als Membran-Elektroden-Einheit zur Wasserelektrolyse geeignet.

*13. Testung der Stabilität der Katalysatorschicht nach der Elektrolyse* Hierfür wurden die Schichtkörper C, D und E nach dem AEM Wasserelektrolysetest auf ein flaches Substrat gelegt. Anschließend wurde mittels Wattestäbchen getestet, ob bzw. wie viel Katalysator abreiben lässt wenn dieses mit einer Kraft (vertikal zur Katalysatorschicht) von 1,3 N über die Katalysatorschicht über eine Länge von 5 mm gezogen wird. Die Ergebnisse sind in Figur 13 (Schichtkörper C), Figur 14 (Schichtkörper D) und Figur 15 (Schichtkörper E) gezeigt. Es ist zu erkennen, dass die erfindungsgemäß hergestellten Schichtkörper eine verbesserte Anbindung des Katalysators an die Membran aufweisen, was für die Langzeitanwendung Elektrolyse eine erhöhte Lebensdauer der Einheit bedeuten kann.

*14. Untersuchung der Rauheit der hergestellten Schichtkörper*

Da in der beabsichtigen Anwendung, nämlich der AEM Wasserelektrolyse, die Katalysatorschicht mit einer porösen, elektrisch leitfähigen Transportschicht in Kontakt gebracht wird, ist die Oberflächenmorphologie der Katalysatorschicht entscheidend für eine gute mechanische und elektrische Verbindung der beiden Schichten. Wünschenswert ist hierfür eine möglichst geringe Rauigkeit um eine homogene Druckverteilung zu gewährleisten und mechanischen Stress zu minimieren. Deshalb wurde die Oberflächenrauigkeit der Katalysatorschicht eines wie in Beispiel 8 beschriebenen konventionell hergestellten verstärkten Schichtkörper gemäß DIN ISO 11562 analysiert. Hierfür wurde eine Fläche von 5.2 mm x 5.2 mm mittels Konvokal-Mikroskopie (MarSurf CM explorer, Mahr GmbH, Deutschland) untersucht und mit Hilfe der zugehörigen Software (MarSurf MfM Extended 7.4.8737) ausgewertet. Dabei wurde ein Wellenfilter (Gaußfilter 800 $\mu$m, cut-off 2.5 $\mu$m), welcher sich bei zu erwartenden Mitten rau werten $R_a$ im Bereich 0.1 $\mu$m bis 2.0 $\mu$m eignet, angewendet. Ein repräsentatives Linienprofil ist in Figur 19 gezeigt. Die Mittenrauigkeit wurde gemäß DIN EN ISO 4287 bestimmt: $R_a = 1.68 \pm 0.39$ $\mu$m. Die Oberflächenrauigkeit wurde nach ISO 25178 bestimmt: $S_a = 1,85 \pm 0.34$ $\mu$m. Figur 20 zeigt einen repräsentativen Ausschnitt der 3D-Oberfläche.

Mit gleicher Prozedur wurde die Oberflächenrauigkeit der Katalysatorschicht eines wie in Beispiel 10 beschriebenen (erfinderischen) hergestellten Schichtkörpers untersucht. Ein repräsentatives Linienprofil ist in Figur 21 gezeigt, die Mittenrauigkeit wurde gemäß DIN EN ISO 4287 bestimmt: $R_a = 0.137 \pm 0.013$ $\mu$m. Figur 22 zeigt einen repräsentativen Ausschnitt der 3D-Oberfläche, die Oberflächenrauigkeit wurde nach ISO 25178 bestimmt: $S_a = 0.137 \pm 0.056$ $\mu$m. Aus dem Vergleich der gemessenen Parametern wird deutlich, dass die Rauigkeit der Katalysatorschicht der erfinderisch hergestellten Schichtkörper (aus Beispiel 10) signifikant um etwa eine Größenordnung niedriger ist als die des konventionell hergestellten Schichtkörpers (aus Beispiel 8). Die Linienprofile bzw. die 3D-Ausschnitte verdeutlichen diesen Zusammenhang.

*15. Untersuchung der Gaspermeabilität des erfinderisch hergestellten Schichtkörpers*

Für die Anwendung in der AEM Wasserelektrolyse ist bedeutsam, dass die beiden in der Elektrolyse an der jeweiligen Elektrode entstehenden Gase (Wasserstoff und Sauerstoff) sich nicht nennenswert vermischen können. Hierfür ist eine gewisse Gasdichtigkeit vertikal zur Ebene des Schichtkörpers erforderlich. Um zu überprüfen, ob wesentliche Defekte in Form von durchgehenden Löchern durch die lonomerschicht vorliegen, wurde die Luftdurchlässigkeit eines wie in Beispiel 10 produzierten Schichtkörpers mittels Gurley-Densometer (Gurley Precission Insutruments) durchgeführt. Dieser Test ist speziell für Materialien mit Luftdurchlässigkeiten im Bereich zwischen 0.1 $\mu$m/(Pa·s) und 100 $\mu$m/ (Pa·s) geeignet. Die ermittelte Gurley-Zahl gibt die Anzahl an Sekunden an, die 100 $cm^3$ Gas benötigen, um durch eine Fläche von einem $inch^2$ (25.4 mm*25.4 mm = 645.16 $mm^2$) zu diffundieren. Vor dem Test wurde das Messgerät mit einem Testmaterial kalibriert. Bei dem aus Verbundkörper konnte jedoch keine Gurley Zahl ermittelt werden, da die Dichtigkeit zu hoch war und das Volumen von 100 ml selbst nach 24 Stunden nicht durch den Testkörper diffundiert ist. Dies weißt auf eine hinreichend hohe Gasdichtigkeit der erfindungsgemäßen Schichtkörper hin.

*16. Fazit*

Man sieht deutlich, dass durch die erfinderische Einbettung des Gewebes die Schichtkörper bezüglich ihrer mechanischen Eigenschaften wesentlich verbessert werden konnten. Des Weiteren wurde die Eignung für die AEM-Wasserelektrolyse gezeigt, wobei insbesondere bei der Herstellung mit Siliziumdioxid in der Katalysatorschicht Spannungen erzielt werden konnten, welche nahezu identisch mit konventionell beschichteten, verstärkten (mit Siliciumdioxid hergestellten) Schichtkörper sind. Letztendlich wiesen die erfinderisch hergestellten Membranen jedoch zusätzlich eine verbesserte Anhaftung des Katalysators auch nach der Elektrolyse auf, was auf eine erhöhte Lebenszeit der erfinderisch hergestellten Schichtkörper schließen lässt.

Die Figuren 16, 17 und 18 zeigen Rasterelektronenmikroskopische Aufnahmen des Schichtkörpers E.

Insbesondere aus Figur 16 ist zu erkennen, dass mit dem erfindungsgemäßen Verfahren eine feste Katalysatorschicht 7 mit guter Planarität erzielt wird. Grund ist der Auftrag der Katalysatorschicht auf die flache Glasplatte.

Insbesondere aus Figur 18 ist zu erkennen, dass es mit dem erfindungsgemäßen Verfahren gelingt, das textile Flächengebilde 12 mittig in die feste lonomerschicht 13 einzugliedern.

Bezugszeichenliste

1 Transfersubstrat
2 Katalysatortinte

3 Elektrokatalysator
4 Binder
5 erstes Lösemittel
6 frische Katalysatorschicht
7 feste Katalysatorschicht
8 Ionomerlösung
9 Anionen leitendes Polymer
10 zweites Lösemittel
11 frische Ionomerschicht
12 textiles Flächengebilde
13 feste Ionomerschicht
14 Grenzschicht
15 Schichtkörper

k Stärke der festen Katalysatorschicht
i Stärke der festen Ionomerschicht
g Stärke der Grenzschicht
s Stärke des gesamten Schichtkörpers

## Patentansprüche

**1.** Verfahren zum Herstellen eines elektrokatalytisch aktiven bzw. aktivierbaren Schichtkörpers, umfassend die folgenden, nicht chronologischen Schritte:

a) Bereitstellen eines Transfersubstrats;
b) Bereitstellen einer Katalysatortinte, die mindestens ein erstes Lösemittel, mindestens ein im ersten Lösemittel gelöster, polymerer Binder, sowie mindestens einen partikulären Elektrokatalysator enthält;
c) Auftragen der Katalysatortinte auf das Transfersubstrat, sodass auf dem Transfersubstrat eine frische Katalysatorschicht entsteht;
d) Abreichern des ersten Lösemittels aus der frischen Katalysatorschicht, sodass auf dem Transfersubstrat eine feste Katalysatorschicht entsteht, welche mindestens zwei Phasen umfasst, nämlich eine erste Phase, die von dem nunmehr ungelösten polymeren Binder gebildet wird und eine zweite Phase, die von dem partikulären Elektrokatalysator gebildet wird, wobei die zweite Phase in der der ersten Phase dispergiert ist;
e) optional: Trennen des Transfersubstrats von der festen Katalysatorschicht;
f) Bereitstellen einer Ionomerlösung, die mindestens ein zweites Lösemittel und mindestens ein im zweiten Lösemittel gelöstes, Anionen leitendes Polymer enthält, wobei das erste und das zweite Lösemittel identisch oder unterschiedlich sind;
g) Bereitstellen eines textilen Flächengebildes, welches Fasern aus einem polymeren Fasermaterial enthält;
h) Imprägnieren des textilen Flächengebildes mit der Ionomerlösung in Gegenwart der festen Katalysatorschicht, sodass auf der festen Katalysatorschicht eine frische Ionomerschicht entsteht, welche das mit der Ionomerlösung imprägnierte textile Flächengebilde enthält;
i) Abreichern des zweiten Lösemittels aus der frischen Ionomerschicht, sodass auf der festen Katalysatorschicht eine feste Ionomerschicht entsteht, welche das textile Flächengebilde und das nunmehr ungelöste Anionen leitende Polymer umfasst, wobei das textile Flächengebilde in eine von dem Anionen leitenden Polymer gebildeten Matrix vollständig oder teilweise eingebettet ist;
k) falls noch nicht erfolgt: Trennen des Transfersubstrats von der festen Katalysatorschicht;
l) Erhalt des elektrokatalytisch aktiven bzw. aktivierbaren Schichtkörpers, wobei der Schichtkörper die feste Katalysatorschicht und darauf aufgebracht die feste Ionomerschicht aufweist;
wobei das Bereitstellen des textilen Flächengebildes und das Bereitstellen der Ionomerlösung unter der Maßgabe erfolgt,
dass das polymere Fasermaterial eine erste Wiederholeinheit aufweist, die mindestens zwei Phenylen-Gruppen umfasst,
und dass das Anionen leitende Polymer eine zweite Wiederholeinheit aufweist, die mindestens zwei Phenylen-Gruppen umfasst,
wobei die erste und die zweite Wiederholeinheit identisch oder unterschiedlich sind.

**2.** Verfahren nach Anspruch 1, **dadurch gekennzeichnet, dass** das Imprägnieren des textilen Flächengebildes mit der Ionomerlösung dadurch erfolgt,

dass das textile Flächengebilde zunächst auf die feste Katalysatorschicht aufgelegt und sodann das auf der festen Katalysatorschicht aufgelegte textile Flächengebilde mit der Ionomerlösung imprägniert wird.

3. Verfahren nach Anspruch 1, **dadurch gekennzeichnet, dass** das Imprägnieren des textilen Flächengebildes mit der Ionomerlösung dadurch erfolgt,
dass zunächst die Ionomerlösung auf die feste Katalysatorschicht aufgetragen wird und sodann das textile Flächengebilde in die auf der festen Katalysatorschicht aufgetragenen Ionomerlösung eingetaucht wird.

4. Verfahren nach Anspruch 3, **dadurch gekennzeichnet, dass** zumindest ein Teil des zweiten Lösemittels aus der auf der festen Katalysatorschicht aufgetragenen Ionomerlösung abgereichert wird, bevor das textile Flächengebilde in die auf der festen Katalysatorschicht aufgetragenen Ionomerlösung eingetaucht wird.

5. Verfahren nach einem der Ansprüche 1 bis 4, **dadurch gekennzeichnet, dass** das erste Lösemittel und das zweite Lösemittel identisch oder unterschiedlich ausgewählt sind aus der Gruppe bestehend aus den folgenden Lösemitteln: Dimethylsulfoxid (DMSO), Ethanol (EtOH), Acetonitril (ACN).

6. Verfahren nach einem der Ansprüche 1 bis 5, **dadurch gekennzeichnet, dass** das Abreichern des ersten Lösemittels und/oder des zweiten Lösemittels aus der frischen Katalysatorschicht bzw. aus der frischen Ionomerschicht unvollständig erfolgt; dergestalt, dass die feste Katalysatorschicht bzw. die feste Ionomerschicht einen Lösemittel-Restgehalt aufweist, wobei der Lösemittel-Restgehalt beim Trennen des Transfersubstrats von der festen Katalysatorschicht zwischen 5 Gew.-% und 30 Gew.-% beträgt, bezogen auf die Gesamtmasse der festen Katalysatorschicht bzw. der festen Ionomerschicht.

7. Verfahren nach einem der Ansprüche 1 bis 6, **dadurch gekennzeichnet, dass** die Katalysatortinte zusätzlich ein vom Elektrokatalysator verschiedenes, partikuläres anorganisches Material enthält.

8. Verfahren nach einem der Anspruch 7, **dadurch gekennzeichnet, dass** das partikuläre anorganische Material Siliciumdioxid und/oder Aluminiumoxid enthält.

9. Verfahren nach Anspruch 7 oder 8, **dadurch gekennzeichnet, dass** der Massenanteil des von dem Elektrokatalysator verschiedenen, partikulären anorganischen Material zwischen 10 Gew.% und 40 Gew. % beträgt, bezogen auf die Gesamtmasse der trockenen Katalysatorschicht.

10. Elektrokatalytisch aktiver bzw. aktivierbarer Schichtkörper, welcher mindestens die folgenden Merkmale aufweist:

$\alpha$) der Schichtkörper umfasst mindestens eine feste Ionomerschicht und mindestens eine feste Katalysatorschicht, wobei die feste Ionomerschicht und die feste Katalysatorschicht über eine Grenzschicht miteinander verbunden sind;
$\beta$) die feste Katalysatorschicht umfasst mindestens zwei Phasen, nämlich eine erste Phase, die von mindestens einem polymeren Binder gebildet ist und eine zweite Phase, die von mindestens einem partikulären Elektrokatalysator gebildet ist, wobei die zweite Phase in der der ersten Phase dispergiert ist;
$\gamma$) die feste Ionomerschicht umfasst ein in eine Matrix vollständig oder teilweise eingebettetes, textiles Flächengebilde, wobei das textile Flächengebilde ein polymeres Fasermaterial enthält und die Matrix von mindestens einem Anionen leitenden Polymer gebildet ist;
$\delta$) das polymere Fasermaterial weist eine erste Wiederholeinheit auf, die mindestens zwei Phenylen-Gruppen umfasst;
$\varepsilon$) das Anionen leitende Polymer weist eine zweite Wiederholeinheit auf, die mindestens zwei Phenylen-Gruppen umfasst;
$\zeta$) die erste und die zweite Wiederholeinheit sind identisch oder unterschiedlich.

11. Elektrokatalytisch aktiver bzw. aktivierbarer Schichtkörper nach Anspruch 10, **dadurch gekennzeichnet, dass** sich das textile Flächengebilde außerhalb der Grenzschicht erstreckt.

12. Elektrokatalytisch aktiver bzw. aktivierbarer Schichtkörper nach Anspruch 10 oder 11, **dadurch gekennzeichnet**, die Stärke der Grenzschicht weniger als 30% der Stärke s des gesamten Schichtkörpers beträgt.

13. Verwendung eines Schichtkörpers nach einem der Ansprüche 10 bis 12 als elektrokatalytisch aktive bzw. aktivierbare Anionenaustauschmembran.

**14.** Verwendung nach Anspruch 13 in einem Verfahren zur Herstellung von Wasserstoff und Sauerstoff durch Elektrolyse von Wasser im alkalischen Milieu.

**15.** Elektrolyseur umfassend mindestens einen Schichtkörper nach Anspruch 10 bis 12.

**16.** Gegenstand nach einem der Ansprüche 1 bis 15, **dadurch gekennzeichnet, dass** es sich bei dem textilen Flächengebilde um ein Gewebe oder um ein Gelege oder um ein Gewirk oder um ein Gestrick oder um einen Vliesstoff handelt.

**17.** Gegenstand nach einem der Ansprüche 1 bis 16, **dadurch gekennzeichnet,**
**dass** der polymere Binder eine dritte Wiederholeinheit aufweist, die mindestens zwei Phenylen-Gruppen umfasst, wobei die zweite und die dritte Wiederholeinheit identisch oder unterschiedlich sind, und wobei die erste und die dritte Wiederholeinheit identisch oder unterschiedlich sind.

**18.** Gegenstand nach einem der Ansprüche 1 bis 17, **dadurch gekennzeichnet, dass** die zweite Wiederholeinheit mindestens zwei über eine Einfachbindung verbundene Phenylen-Gruppen umfasst.

**19.** Gegenstand nach einem der Ansprüche 1 bis 18, **dadurch gekennzeichnet,**
**dass** das Anionen leitende Polymer und/oder das polymere Fasermaterial jeweils mindestens eine zwei aromatische Sechsringe verbindende Etherbrücke, sowie wahlweise eine Sulfonyl-Gruppe oder eine Carbonyl-Gruppe aufweisen.

**20.** Gegenstand nach Anspruch 19, **dadurch gekennzeichnet, dass** die Carbonyl-Gruppe bzw. die Sulfonyl-Gruppe zwei Phenylen-Gruppen verbindet.

**21.** Gegenstand nach einem Ansprüche 1 bis 20, **dadurch gekennzeichnet, dass** es sich bei dem Fasermaterial um Polyetherkethon (PEK), Polyetheretherketon (PEEK) oder um sulfoniertes Polyetheretherketon (SPEEK) oder um teilsulfoniertes Polyetheretherketon (SPEEK) handelt.

**22.** Gegenstand nach einem Ansprüche 19 bis 21, **dadurch gekennzeichnet, dass** das Anionen leitende Polymer und/oder der polymere Binder die folgende Struktur (I) aufweist:

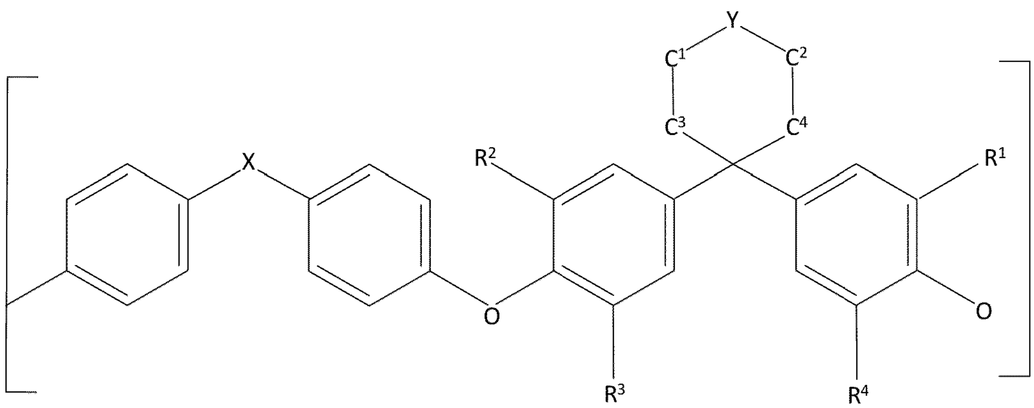
(I)

worin in (I) X für die Carbolyl- bzw. Sulfonyl-Gruppe steht;
worin in (I) Y ein Strukturelement ist, das ein Stickstoffatom mit einer positiven Ladung umfasst, das an $C^1$ und $C^2$ gebunden ist und über zwei Bindungen an einen oder zwei Kohlenwasserstoffreste mit eins bis zwölf oder eins bis sechs oder eins bis fünf Kohlenstoffatomen gebunden ist,
worin in (I) $R^1$, $R^2$, $R^3$ und $R^4$ gleiche oder verschiedene Alkylgruppen mit eins bis vier Kohlenstoffatomen sind.

**23.** Gegenstand nach einem Ansprüche 19 bis 21, **dadurch gekennzeichnet, dass** das Anionen leitende Polymer und/oder der polymere Binder die folgende Struktur (II) aufweist:

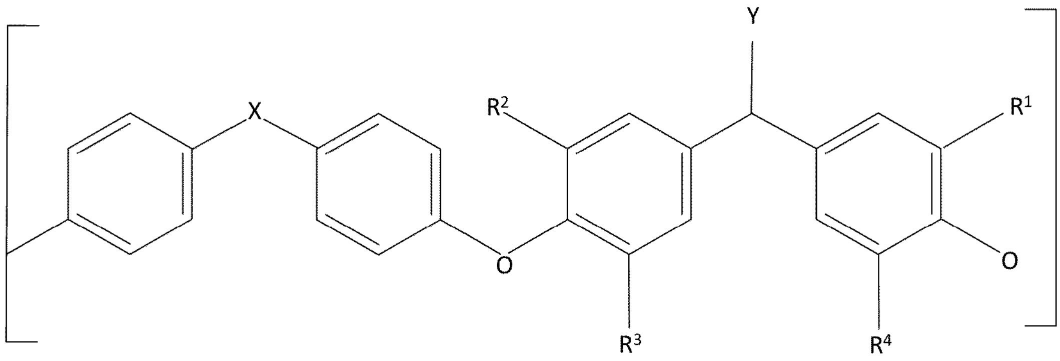

(II)

worin in (II) X für die Carbolyl- bzw. Sulfonyl-Gruppe steht;
worin in (II) Y ein Strukturelement ist, das ein Stickstoffatom mit einer positiven Ladung umfasst, worin in (II) $R^1$, $R^2$, $R^3$ und $R^4$ gleiche oder verschiedene Alkylgruppen mit eins bis vier Kohlenstoffatomen sind.

**24.** Gegenstand nach einem der Ansprüche 1 bis 23, **dadurch gekennzeichnet, dass** der Schichtkörper eine nach ISO 5636-5:2013 bestimmte Gurley-Zahl über 16 h aufweist.

**25.** Gegenstand nach einem der Ansprüche 1 bis 24, wobei die feste Katalysatorschicht eine Stärke k aufweist, und wobei die feste Ionomerschicht eine Stärke i aufweist,

**dadurch gekennzeichnet, dass** für die Stärken folgende Beziehungen gelten:

$$0.05*s < k < 0.4*s$$

und

$$1.5*k < i < 15*k$$

worin s für die Gesamtstärke des Schichtkörpers steht.

**26.** Gegenstand nach einem der Ansprüche 1 bis 25, **dadurch gekennzeichnet, dass** für die Stärke s des gesamten Schichtkörpers zwischen 40 μm und 100 μm beträgt.

**27.** Gegenstand nach einem der Ansprüche 1 bis 26, **dadurch gekennzeichnet, dass** der Schichtkörper eine von Elektrokatalysator und textilem Flächengebilde freie Grenzschicht aufweist, wobei die Grenzschicht eine Stärke g aufweist, **dadurch gekennzeichnet, dass** für die Stärken folgende Beziehungen gelten:

$$0.01*s < g < 0.4*s$$

worin s für die Gesamtstärke des Schichtkörpers steht.

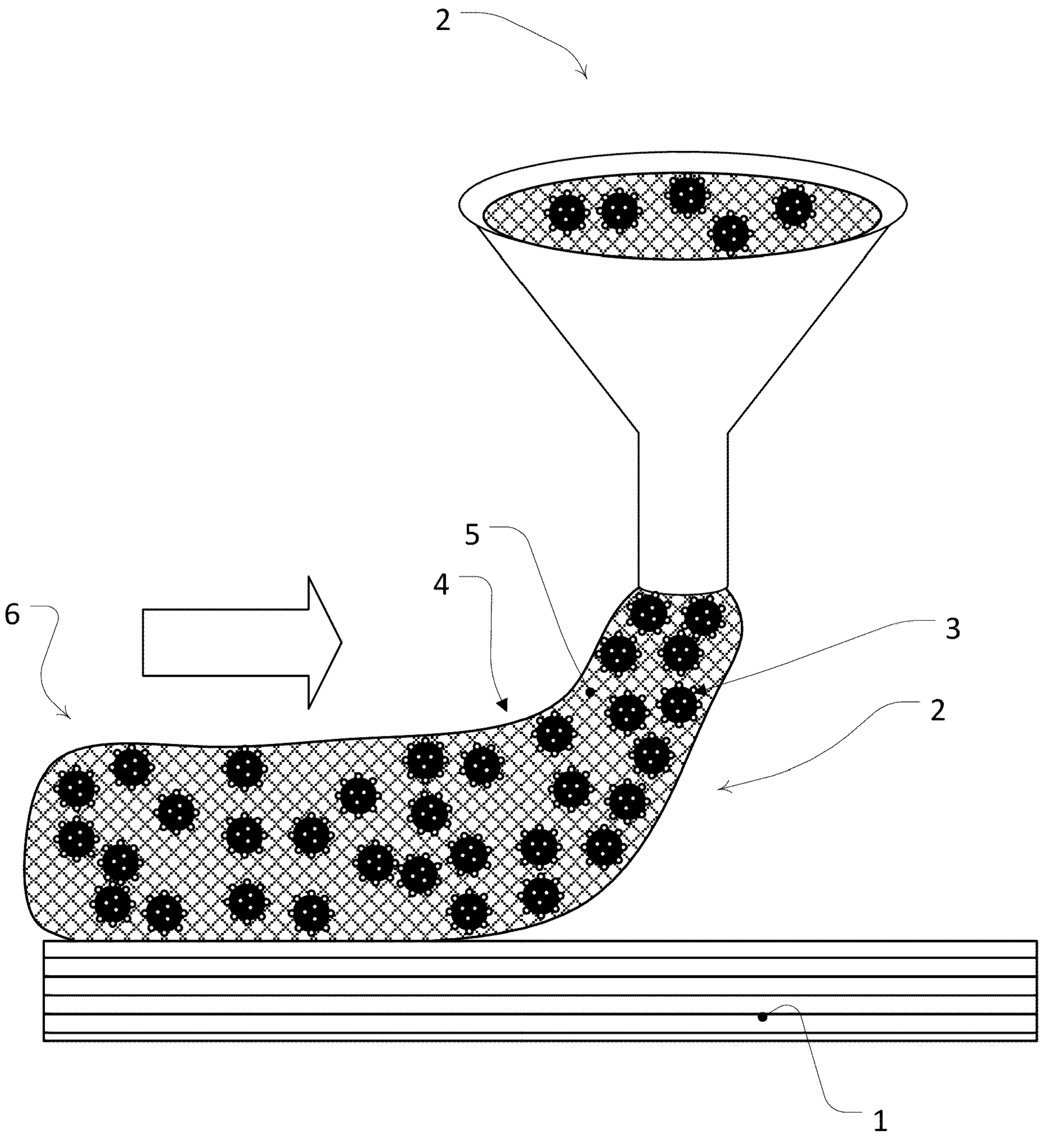


Fig. 1

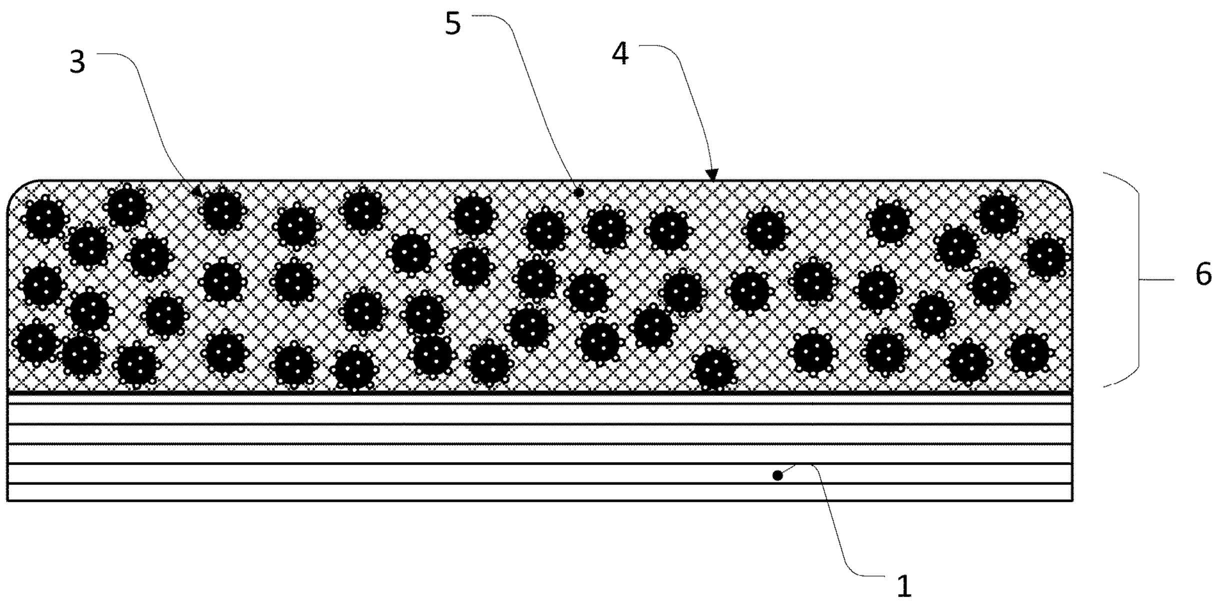


Fig. 2

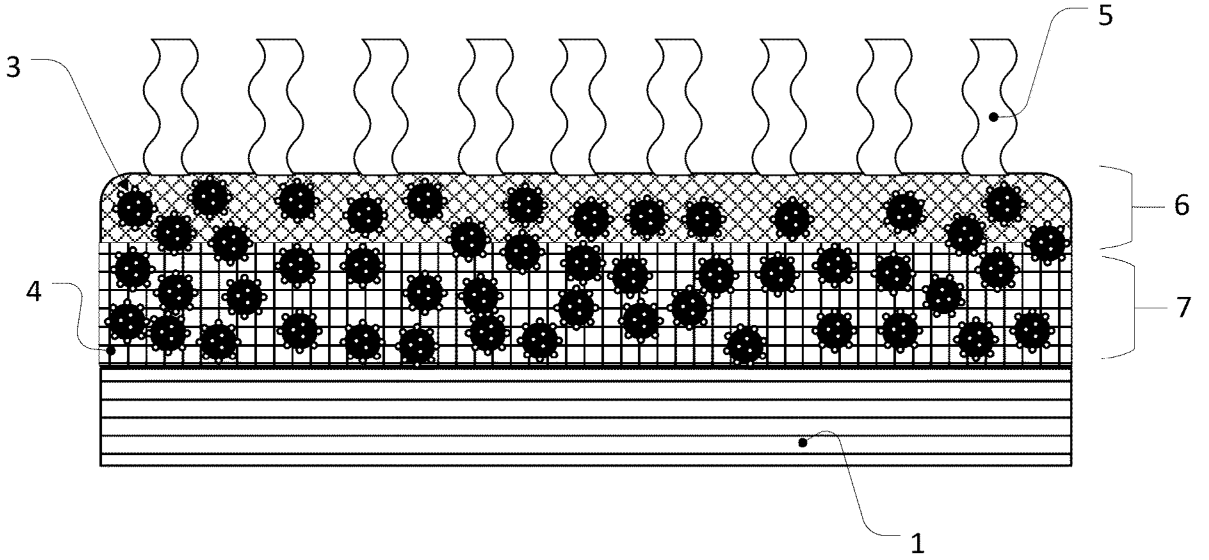


Fig. 3

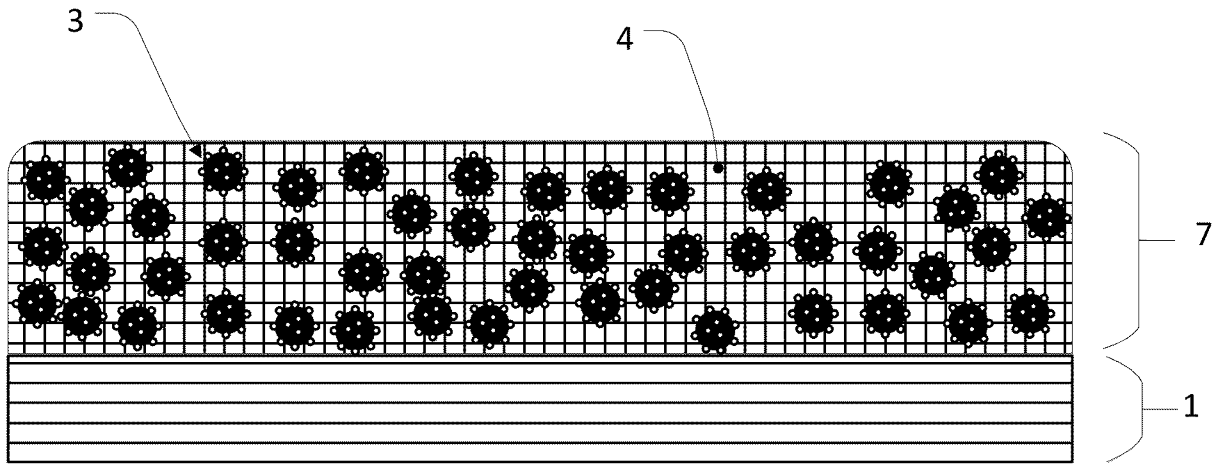


Fig. 4

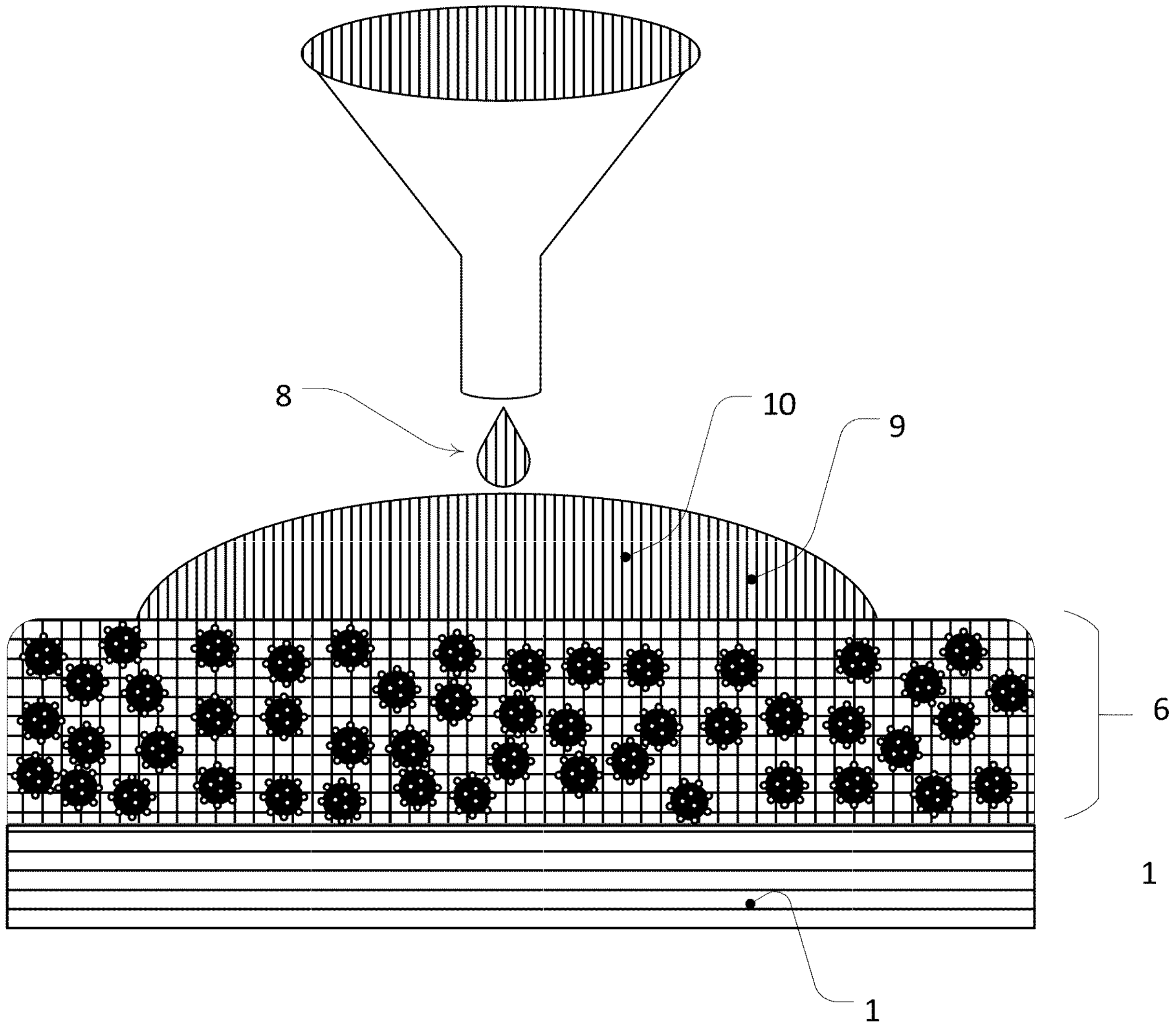


Fig. 5

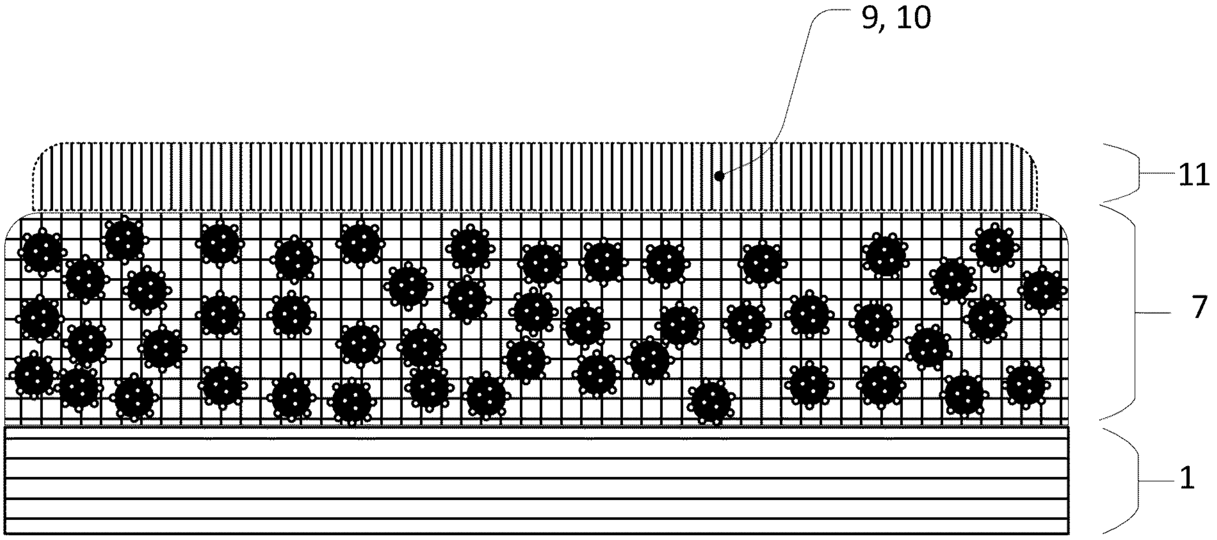


Fig. 6

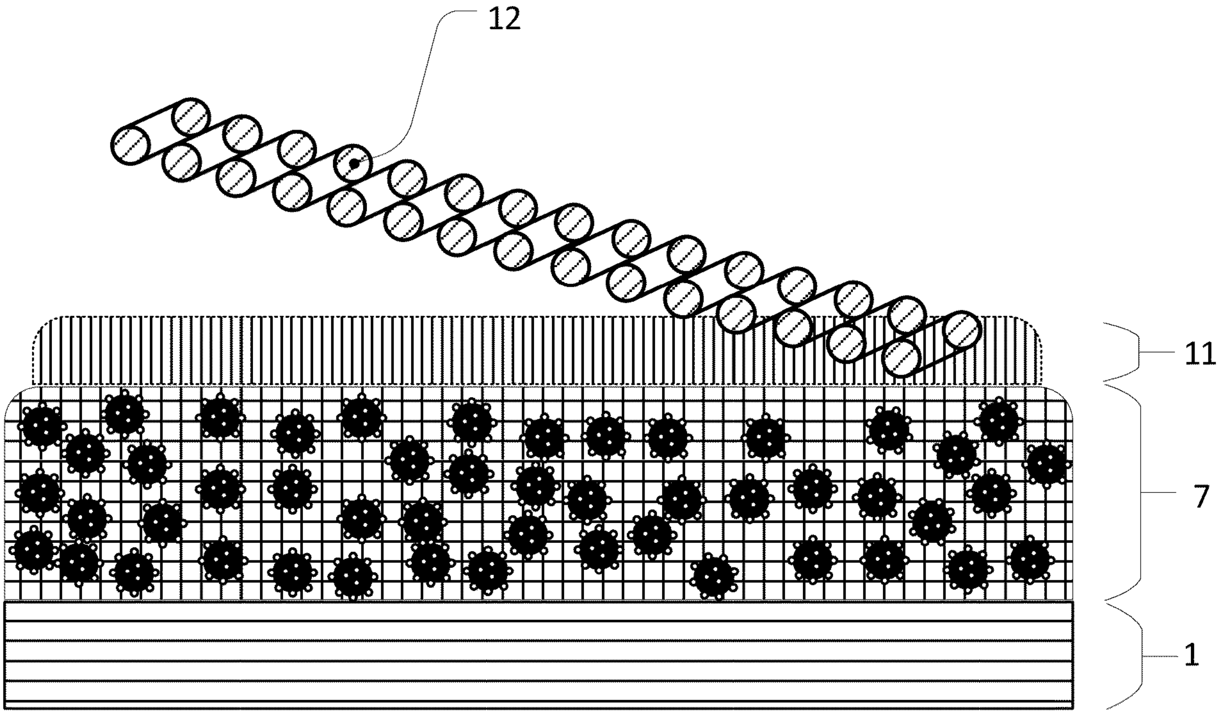


Fig. 7

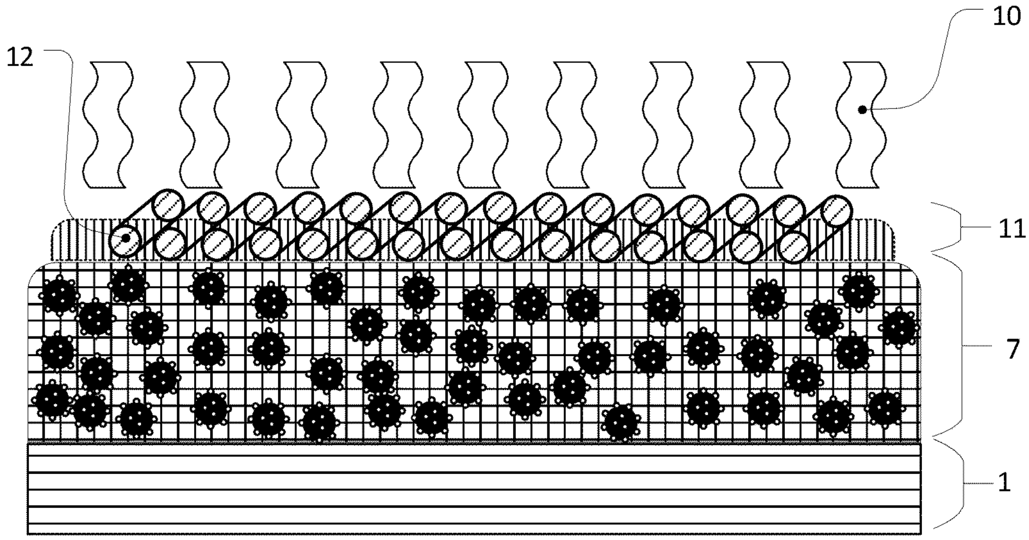


Fig. 8

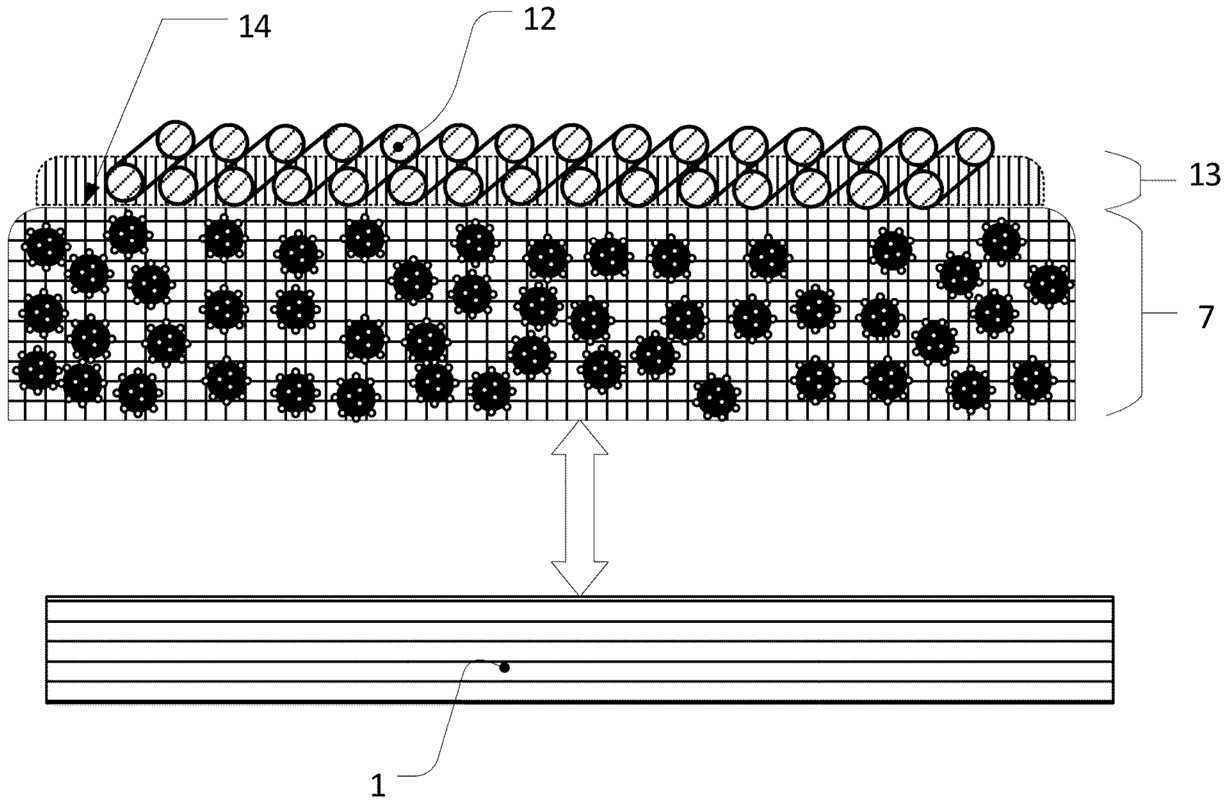


Fig. 9

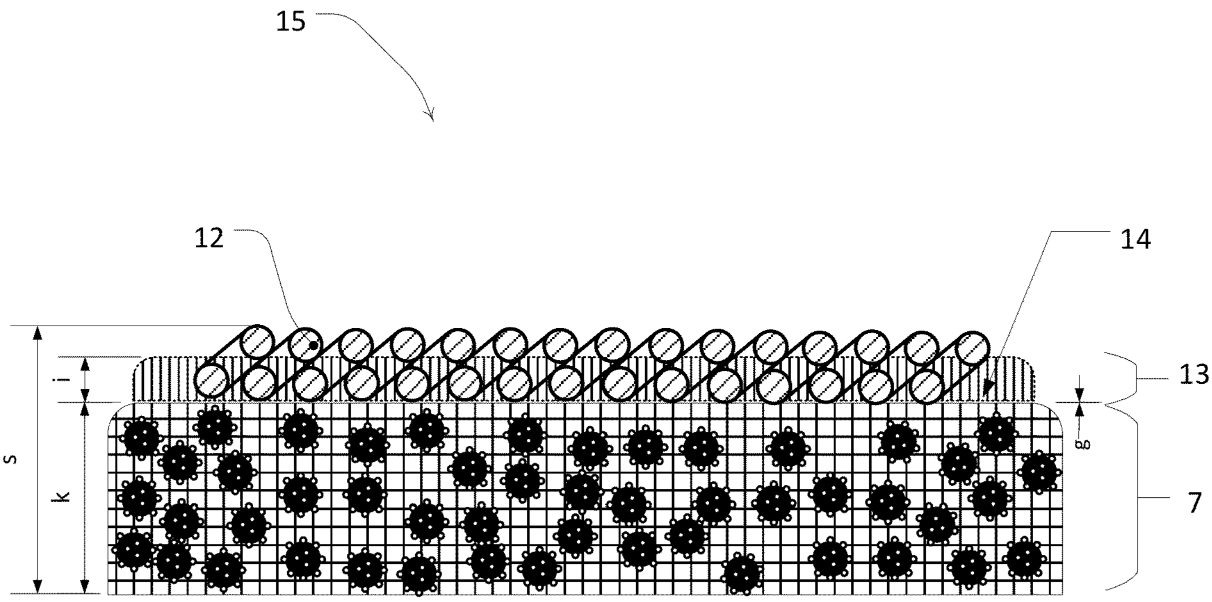


Fig. 10

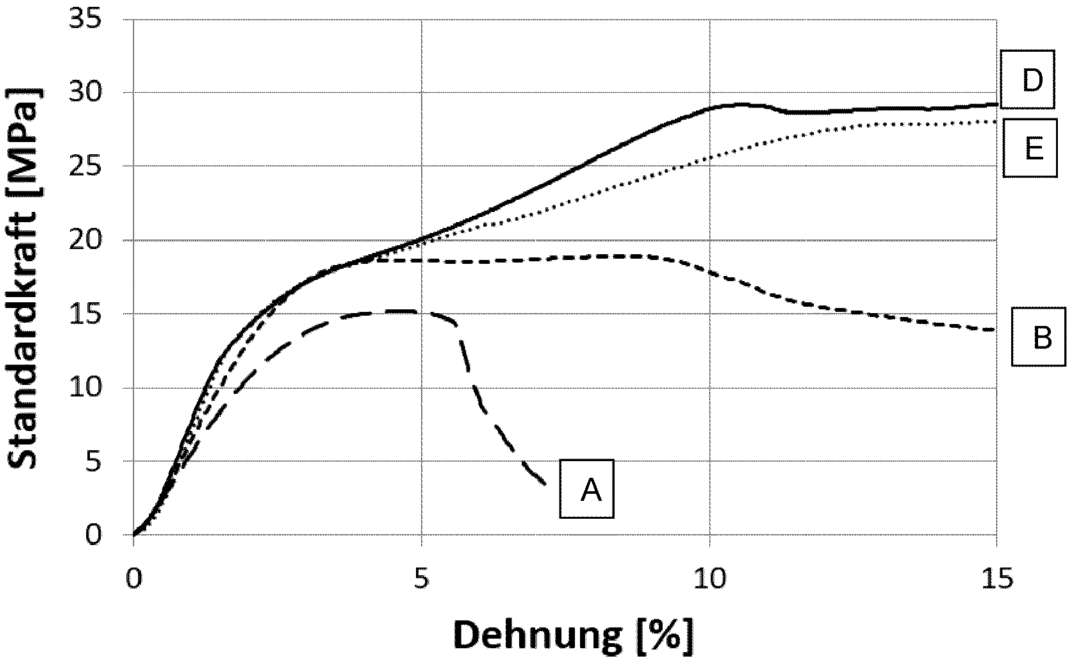


Fig. 11

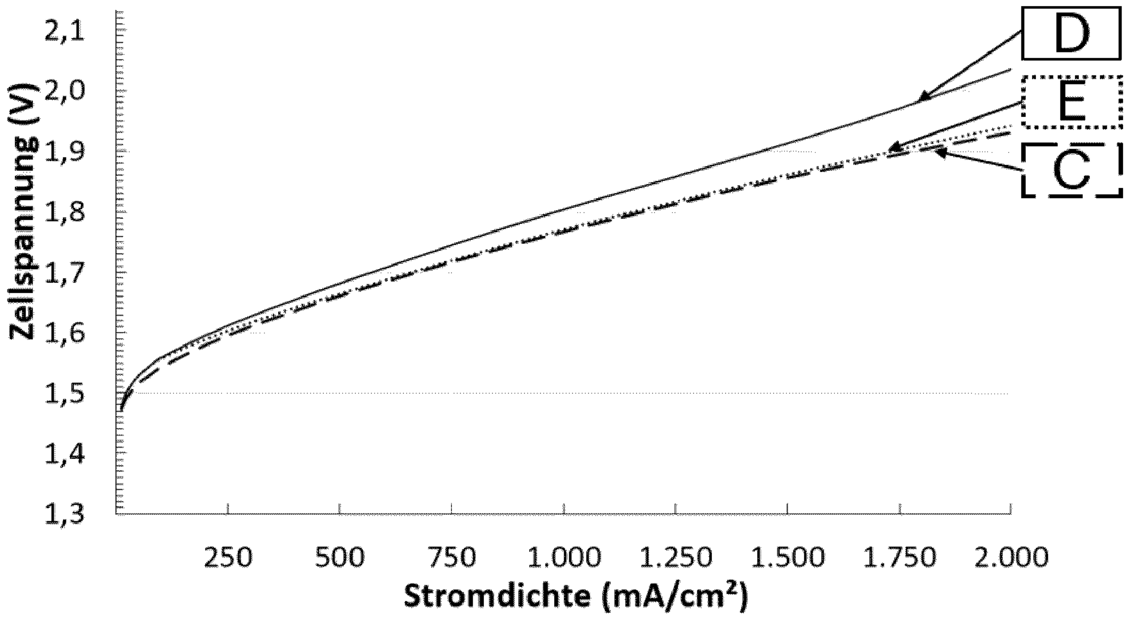
Zellspannung (V)
2,1
2,0
1,9
1,8
1,7
1,6
1,5
1,4
1,3
250
500
750
1.000
1.250
1.500
1.750
2.000
Stromdichte (mA/cm²)
D
E
C

Fig. 12

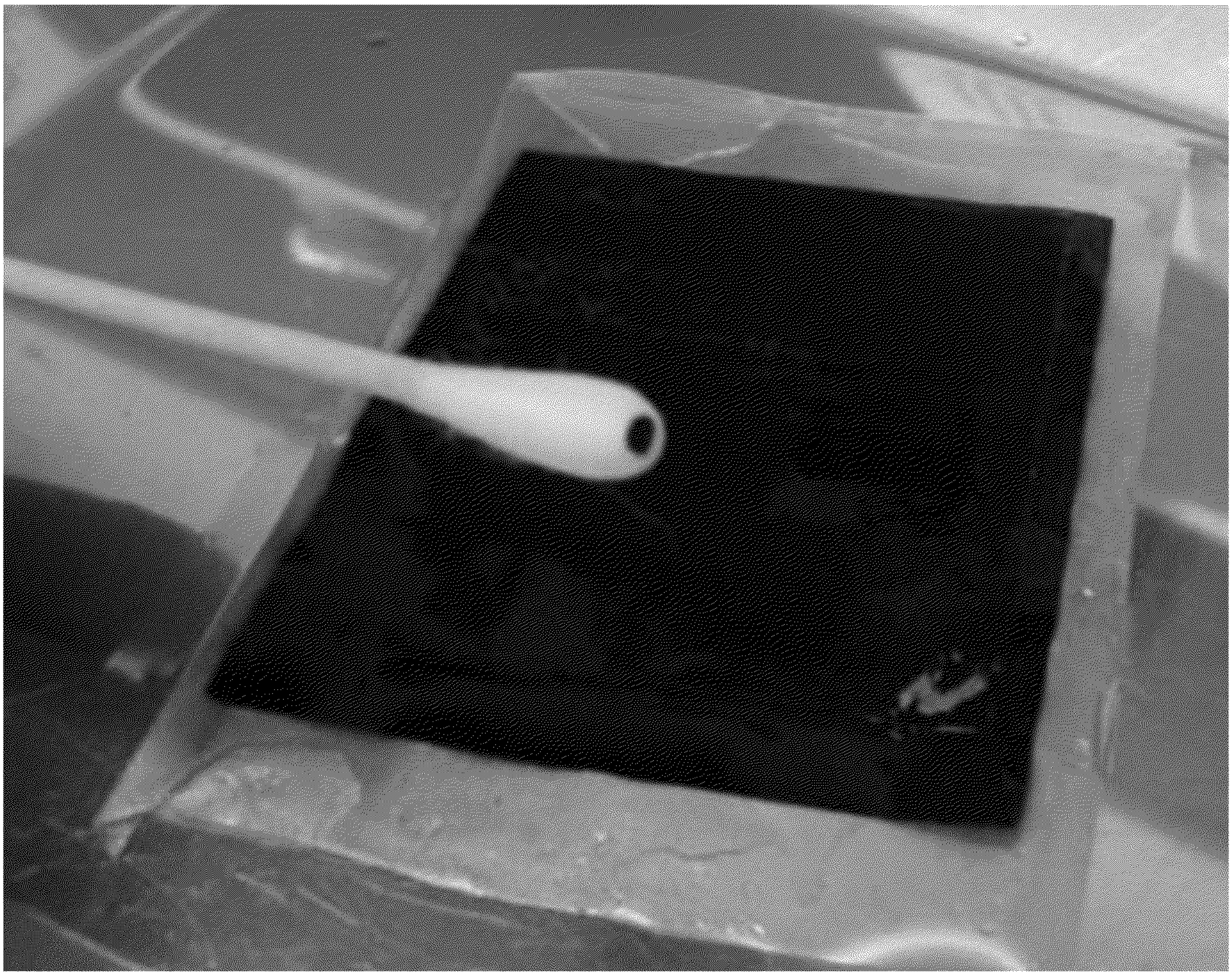

Fig. 13 (Stand der Technik)

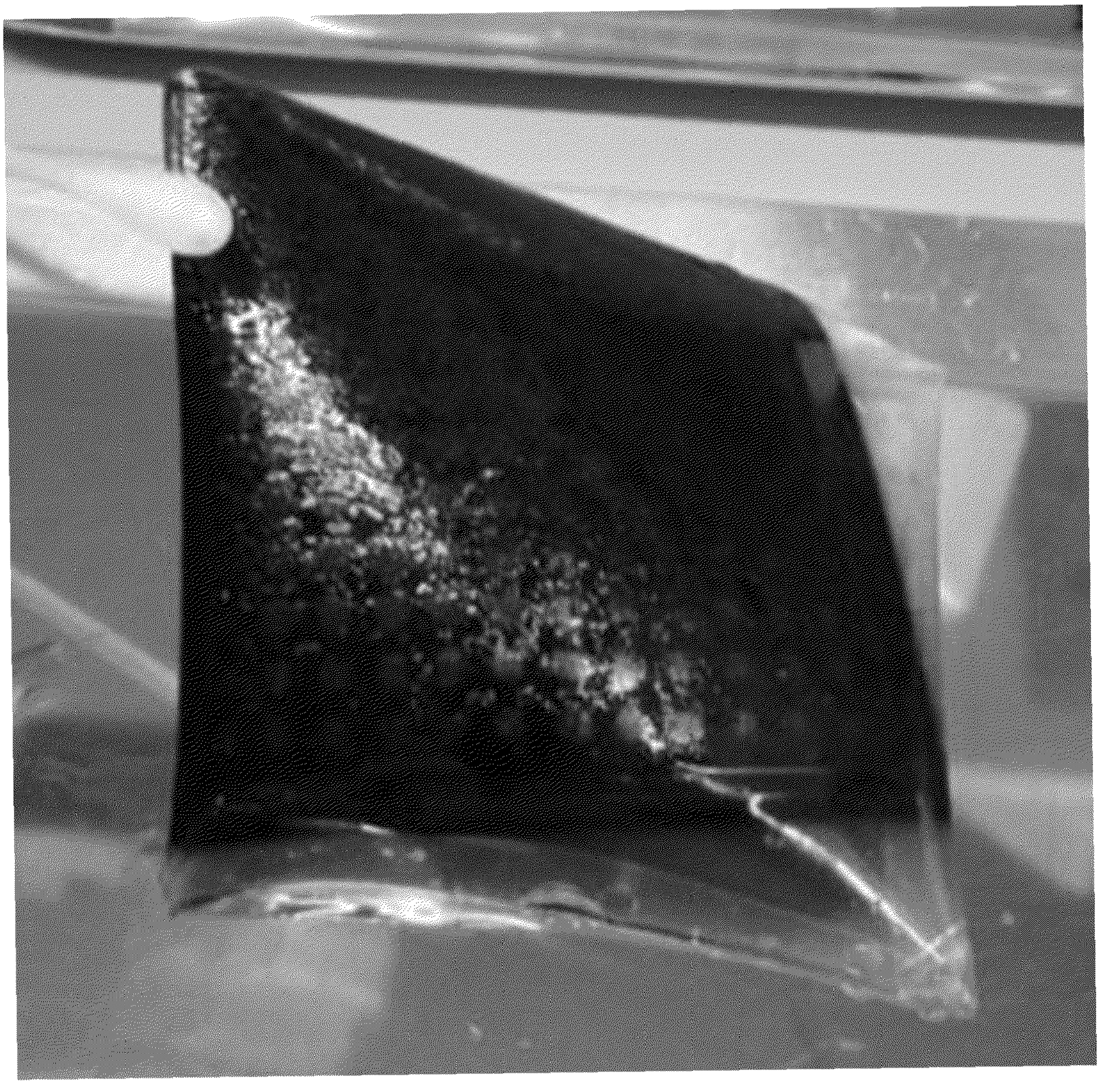

Fig. 14

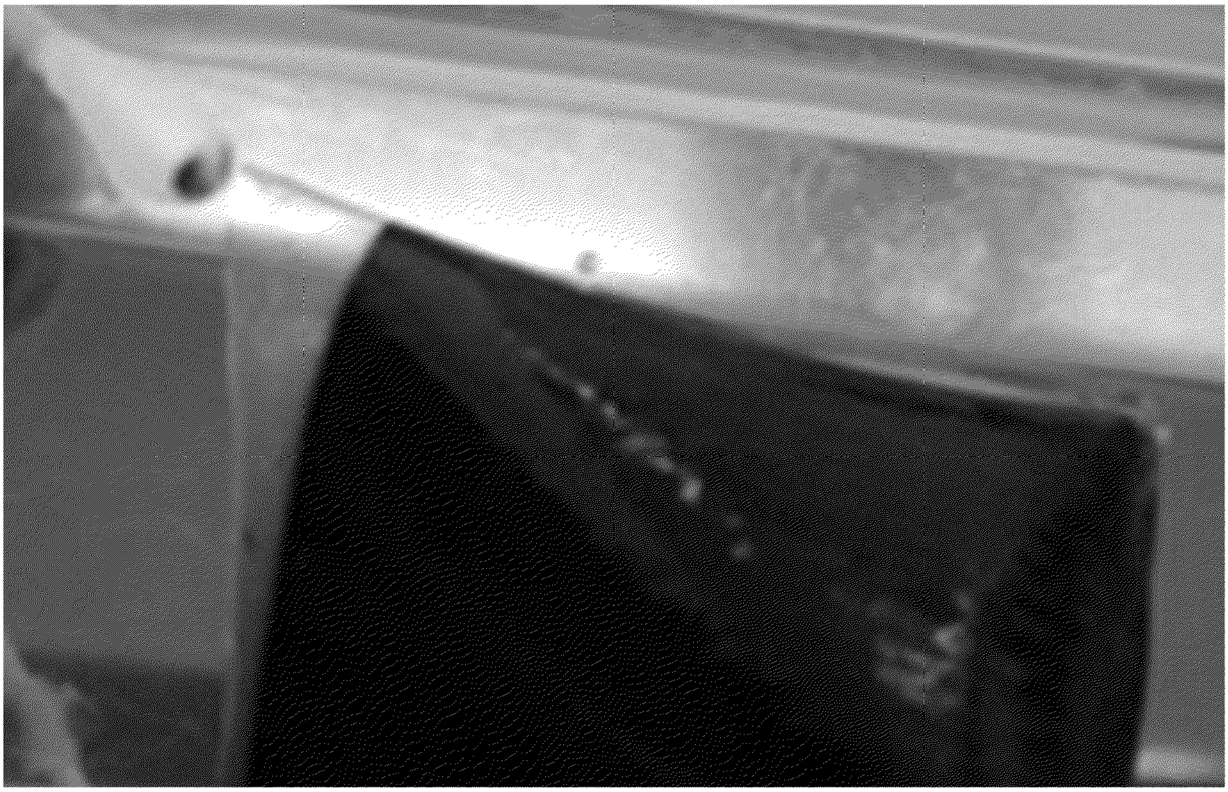

Fig. 15

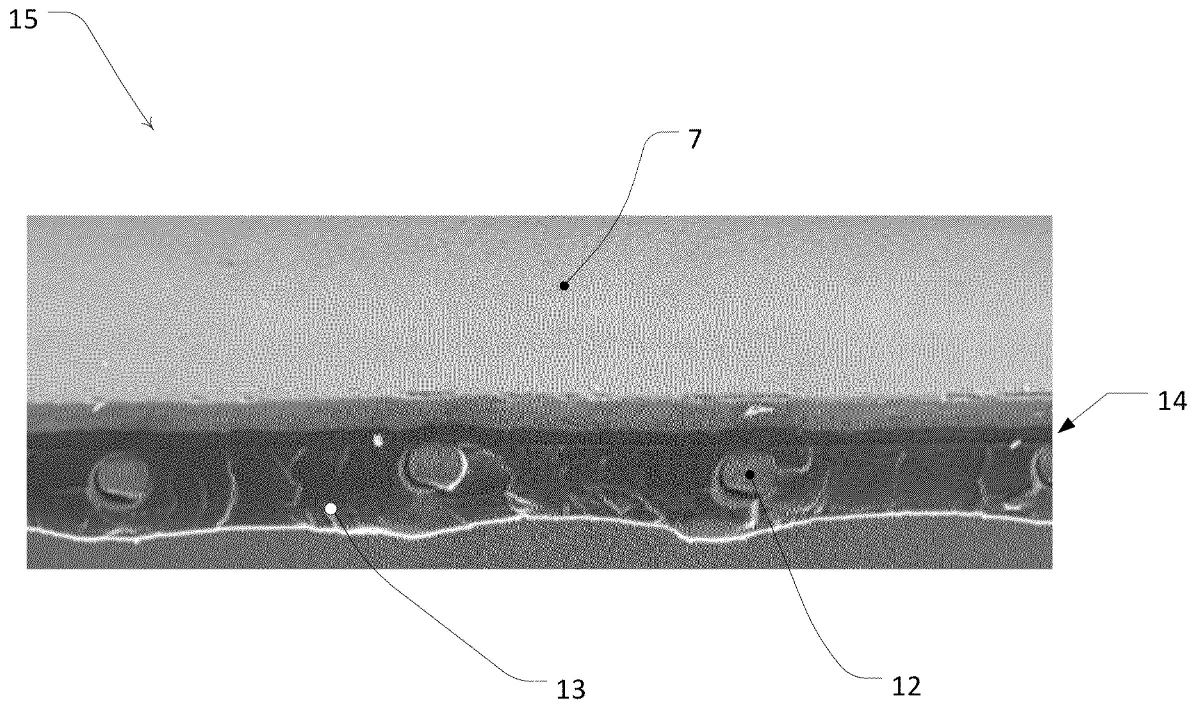


**Fig. 16**

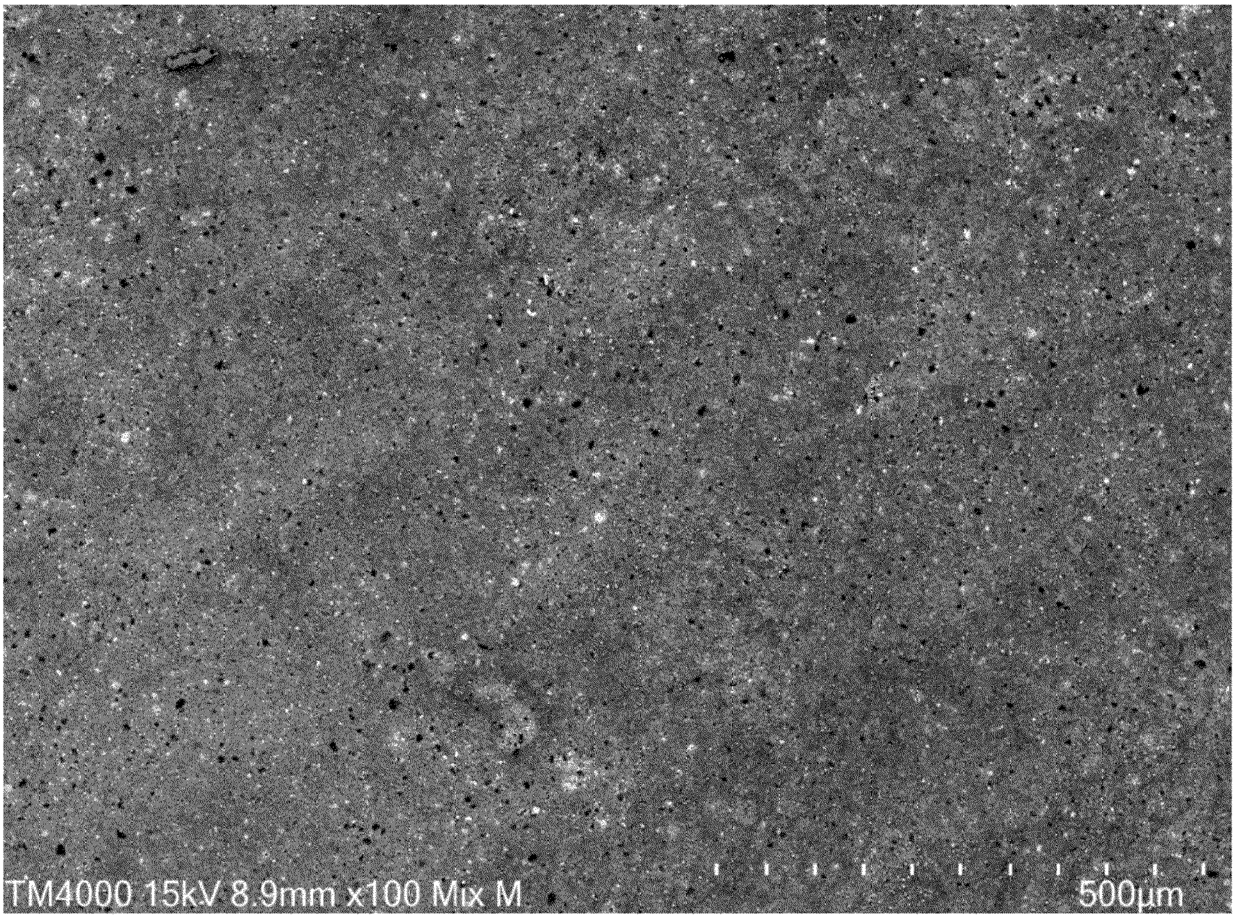


Fig. 17

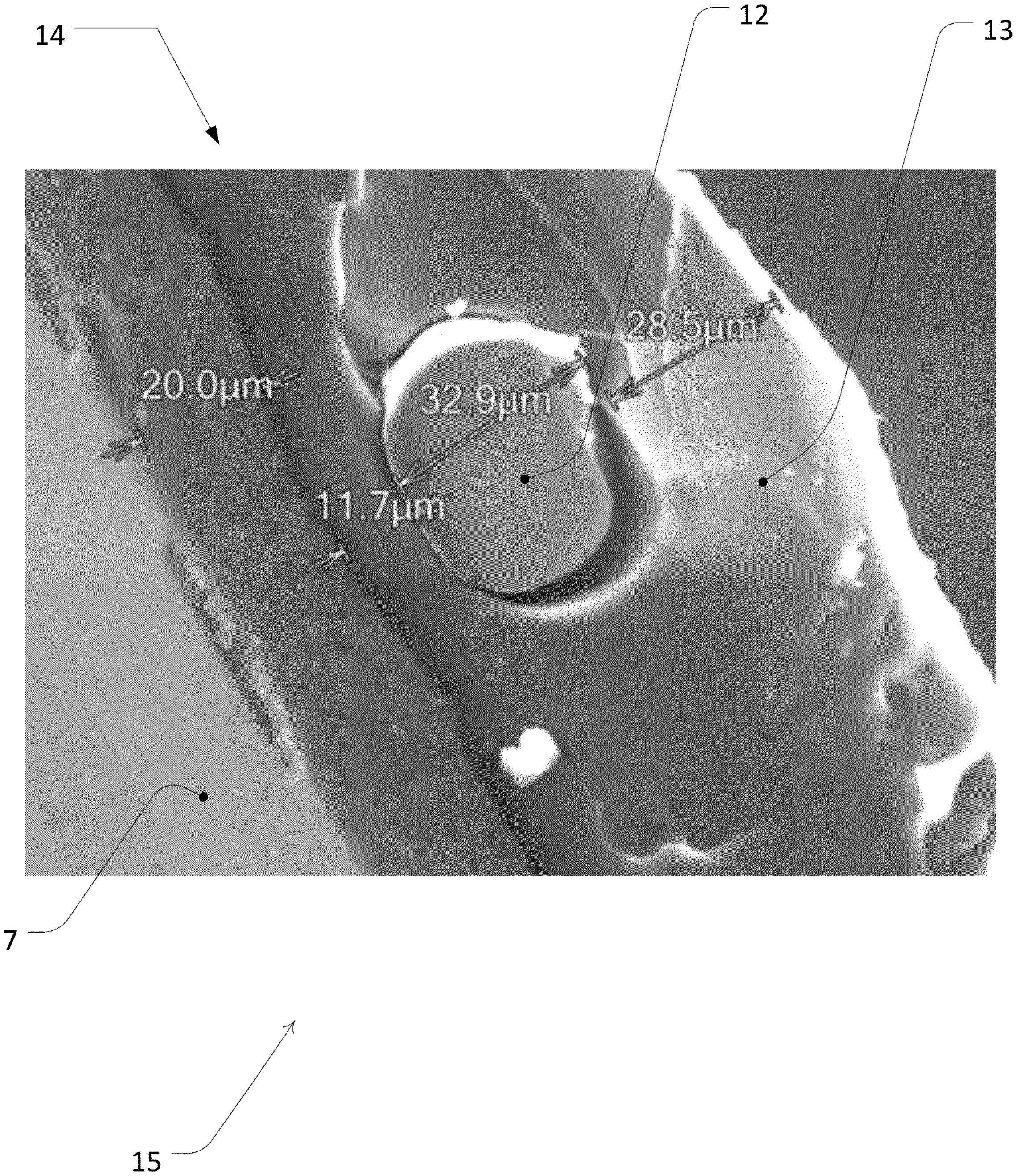


**Fig. 18**

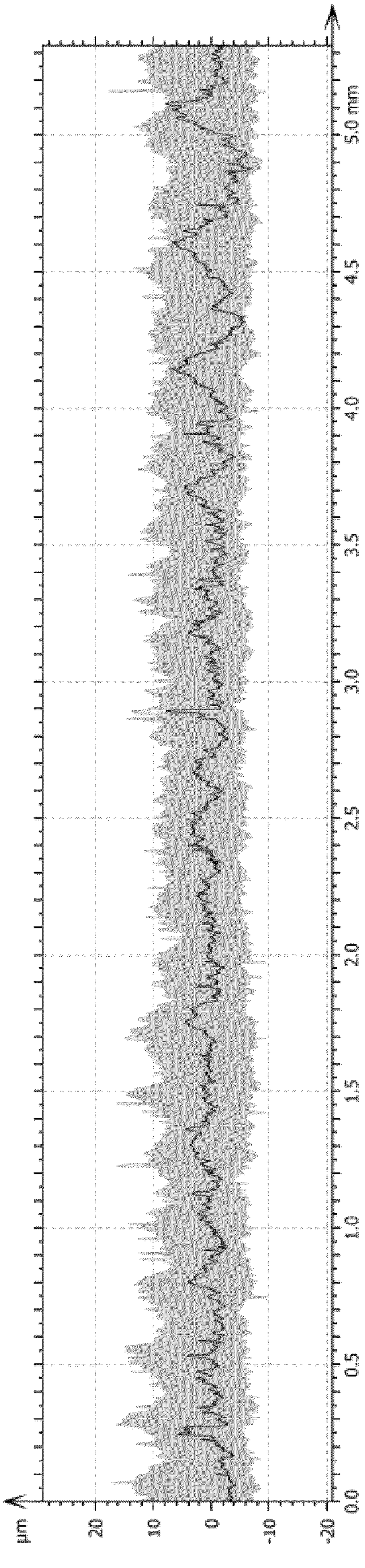


Fig. 19

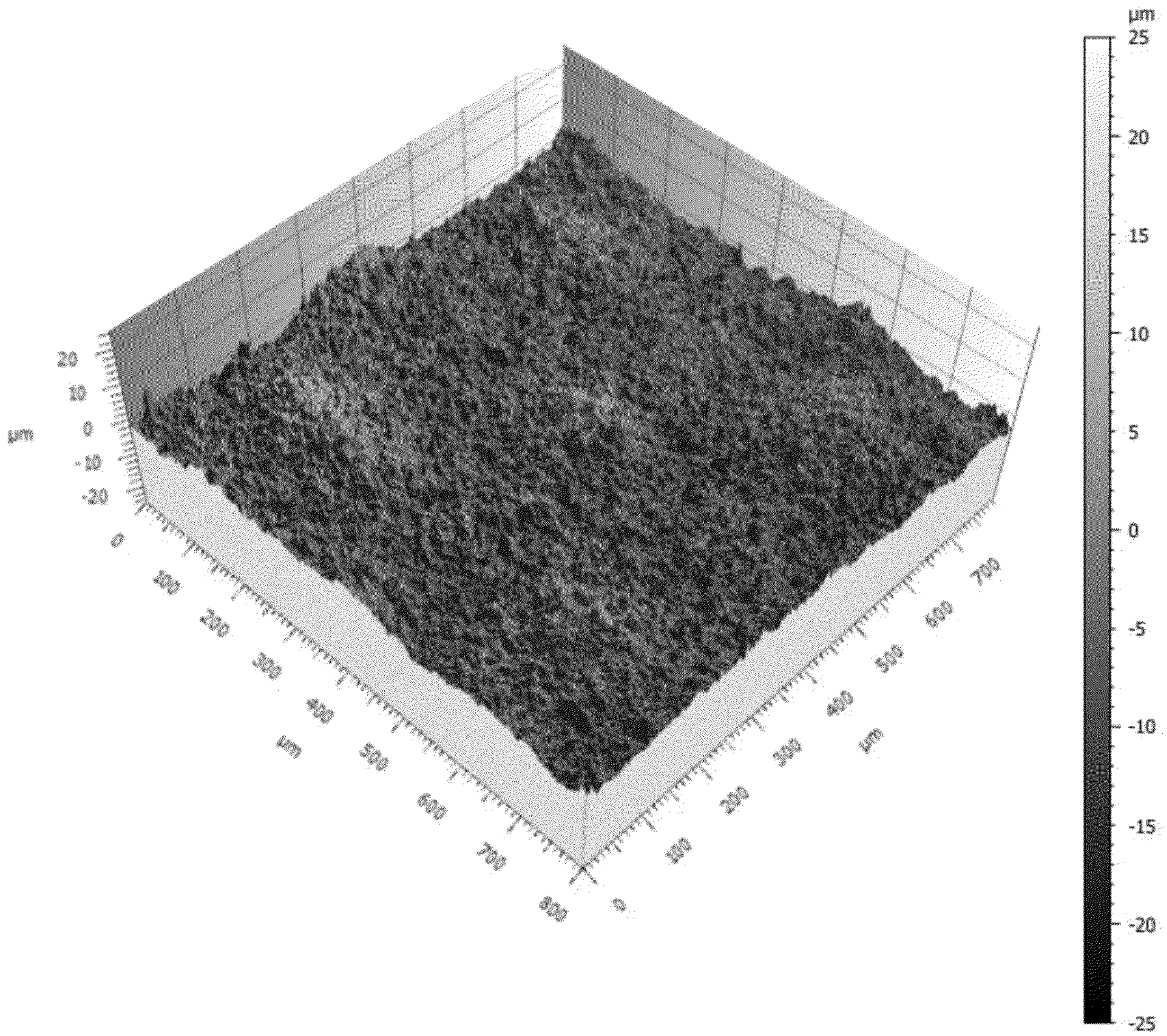
µm
25
20
15
10
5
0
-5
-10
-15
-20
-25
µm
20
10
0
-10
-20
0
100
200
300
400
µm
500
600
700
800
0
100
200
300
400
µm
500
600
700

Fig. 20

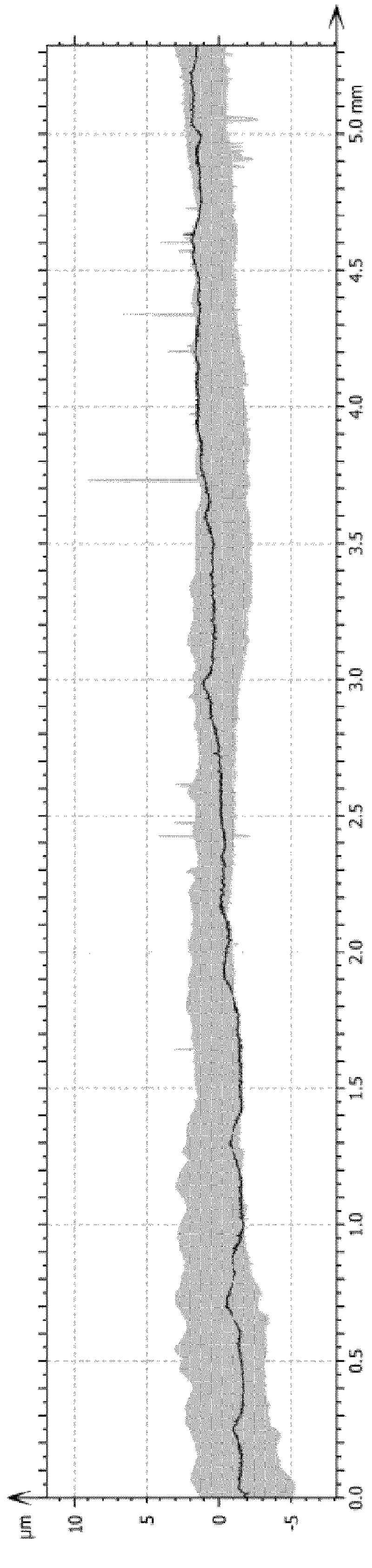


Fig. 21

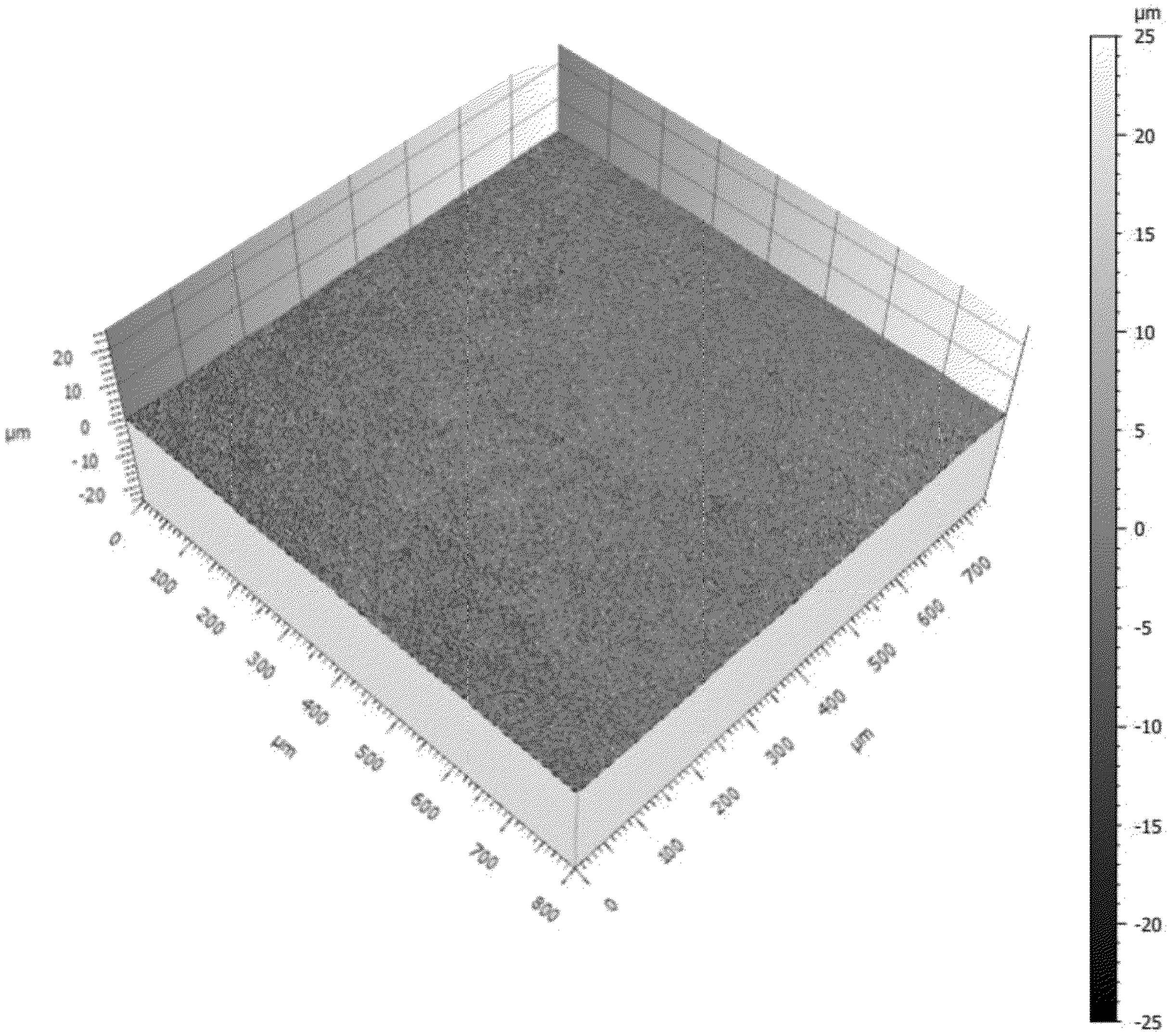
µm
25
20
15
10
5
0
-5
-10
-15
-20
-25
20
10
µm
0
-10
-20
0
100
200
300
400
µm
500
600
700
800
0
100
200
300
µm
400
500
600
700

Fig. 22

Europäisches Patentamt
European Patent Office
Office européen des brevets

# EUROPÄISCHER RECHERCHENBERICHT

Nummer der Anmeldung
EP 24 21 5882

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 900 249 B1 (GORE & ASS [US]) 22. Oktober 2003 (2003-10-22) * Ansprüche 1, 13, 21-23, 26 * * Beispiele 1-5 * * Absätze [0020], [0030] - [0077] * ----- | 1-27 | INV. C25B1/04 C25B13/08 H01M4/86 H01M4/88 H01M8/1004 ADD. H01M8/1044 H01M8/1081 |
| Y | US 2021/095386 A1 (MINAMIBAYASHI KENTA [JP] ET AL) 1. April 2021 (2021-04-01) * Ansprüche 1-13, 15 * * Absätze [0013] - [0214] * ----- | 1-27 | |
| Y | US 2017/279142 A1 (JONES DEBORAH [FR] ET AL) 28. September 2017 (2017-09-28) * Ansprüche 1-4, 10-13, 15-18 * * Beispiel 1 * * Absätze [0022] - [0067] * ----- | 1-27 | |
| Y | WO 2024/100413 A1 (JOHNSON MATTHEY HYDROGEN TECHNOLOGIES LTD [GB]) 16. Mai 2024 (2024-05-16) * Ansprüche 1-4, 18, 21, 22, 29, 36 * * Seite 5, Zeile 28 - Seite 25, Zeile 26 * ----- | 1-27 | RECHERCHIERTE SACHGEBIETE (IPC) C25B H01M |

Der vorliegende Recherchenbericht wurde für alle Patentansprüche erstellt

1

| Recherchenort | Abschlußdatum der Recherche | Prüfer |
|---|---|---|
| München | 14. Mai 2025 | Perednis, Dainius |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 21 5882

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2025

| Im Recherchenbericht angeführtes Patentdokument | Datum der Veröffentlichung | Mitglied(er) der Patentfamilie | Datum der Veröffentlichung |
|---|---|---|---|
| EP 0900249 B1 | 22-10-2003 | AU 2928397 A | 19-11-1997 |
| | | CA 2252679 A1 | 06-11-1997 |
| | | CN 1217004 A | 19-05-1999 |
| | | EP 0900249 A1 | 10-03-1999 |
| | | JP 4361608 B2 | 11-11-2009 |
| | | JP 2000510510 A | 15-08-2000 |
| | | JP 2007080815 A | 29-03-2007 |
| | | WO 9741168 A1 | 06-11-1997 |
| US 2021095386 A1 | 01-04-2021 | CA 3091102 A1 | 03-10-2019 |
| | | CN 112204071 A | 08-01-2021 |
| | | CN 116065188 A | 05-05-2023 |
| | | EP 3778697 A1 | 17-02-2021 |
| | | JP 7078041 B2 | 31-05-2022 |
| | | JP WO2019188960 A1 | 11-03-2021 |
| | | KR 20200138179 A | 09-12-2020 |
| | | TW 201942416 A | 01-11-2019 |
| | | US 2021095386 A1 | 01-04-2021 |
| | | WO 2019188960 A1 | 03-10-2019 |
| US 2017279142 A1 | 28-09-2017 | CN 107078327 A | 18-08-2017 |
| | | DK 3177388 T3 | 19-04-2022 |
| | | EP 3177388 A1 | 14-06-2017 |
| | | JP 6707519 B2 | 10-06-2020 |
| | | JP 2017532716 A | 02-11-2017 |
| | | KR 20170038881 A | 07-04-2017 |
| | | US 2017279142 A1 | 28-09-2017 |
| | | WO 2016020668 A1 | 11-02-2016 |
| WO 2024100413 A1 | 16-05-2024 | CN 119998970 A | 13-05-2025 |
| | | GB 2624228 A | 15-05-2024 |
| | | WO 2024100413 A1 | 16-05-2024 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2774203 B1
- WO 2024100383 A2
- WO 2024100413 A1
- WO 2024151961 A1
- EP 24169671
- WO 2019068051 A2
- EP 3770201 B1
- EP 4032934 B1
- EP 4059988 A1
- EP 3770201 A1

### In der Beschreibung aufgeführte Nicht-Patentliteratur

- **VOLK EMILY K. et al.** Recent progress in understanding the catalyst layer in anion exchange membrane electrolyzers - durability, utilization, and integration. *EES. Catal.*, 2024, vol. 2, 109-137
- **KOCH, S.** ; **METZLER, L.** ; **KILIAN, S. K.** ; **HEIZMANN, P. A.** ; **LOMBECK, F** ; **BREITWIESER, M.** ; **VIERRATH, S.** Toward Scalable Production: Catalyst-Coated Membranes (CCMs) for Anion-Exchange Membrane Water Electrolysis via Direct Bar Coating. *Adv. Sustainable Syst.*, 2023, vol. 7, 2200332
- **MALIKAH NAJIBAH** ; **EKATERINA TSOY** ; **HAMZA KHALID** ; **YONGFANG CHEN** ; **QINGFENG LI** ; **CHULSUNG BAE** ; **JAROMIR HNÁT** ; **MICHAELA PLEVOVÄ** ; **KAREL BOUZEK** ; **JONG HYUN JANG**. PBI nanofiber mat-reinforced anion exchange membranes with covalently linked interfaces for use in water electrolysers. *Journal of Membrane Science*, 2021, vol. 640, 119832
- **HENKENSMEIER, DIRK et al.** Separators and Membranes for Advanced Alkaline Water Electrolysis. *Chemical Reviews*, vol. 124 (10), 6393-6443